# EUROPEAN PATENT SPECIFICATION

(11) **EP 3 133 454 B1**
(45) Date of publication and mention of the grant of the patent: **27.12.2017**
(21) Application number: 15181353.2
(22) Date of filing: 18.08.2015
(51) Int. Cl.: G05D 1/00, B60W 50/08

(54) **METHOD AND APPARATUS FOR CONTROLLING A VEHICLE HAVING AUTOMATED DRIVING CONTROL CAPABILITIES**
VERFAHREN UND VORRICHTUNG ZUR STEUERUNG EINES FAHRZEUGS MIT AUTOMATISCHEN ANTRIEBSTEUERUNGSFUNKTIONEN
PROCÉDÉ ET APPAREIL POUR COMMANDER UN VÉHICULE ÉQUIPÉ AVEC DES FONCTIONS DE COMMANDE D'ENTRAÎNEMENT AUTOMATISÉE

(43) Date of publication of application: 22.02.2017
(73) Proprietor: Hitachi, Ltd., Tokyo 100-8280 (JP)
(72) Inventor: TAKAHASHI, Junya, 81925 Munich (DE); ALTMANNSHOFER, Heiko, 84367 Tann (DE); YOKOYAMA, Atsushi, Ibaraki 312-0034 (JP)
(74) Representative: MERH-IP Matias Erny Reichl Hoffmann Patentanwälte PartG mbB

(56) References cited:
- EP-A1- 2 848 488
- DE-A1-102010 031 672
- US-A1- 2015 094 899

## Description

### Description

The present invention relates to methods and apparatuses for controlling a vehicle being configured to operate under automated driving control, computer program products for executing the control methods, and vehicles controlled by such methods or including such apparatus.

### Background

In the automotive field, it is one of the current ambitious development aims to develop and provide vehicles such as cars, busses, trucks, etc. which have a function of autonomous or semi-autonomous driving capabilities related to automated driving control based on environmental information, navigation information and/or sensor information.

Under such automated driving control at least some or even all of the driving functions may be controlled automatically, including e.g. cruise control, lane control or even fully automated control of driving the vehicle.

However, based on the estimate of the reliability of the available environmental information, navigation information and/or sensor information, there may still arise situations in which a control system of the vehicle determines that a handover of the automated control to manual control may be required or recommendable so that an operator of the vehicle can take over the control of some or all of the automatically controlled functions of the car such as steering and/or speed control including acceleration and braking functions.

In the prior art, it is usually considered that a human machine interface mounted to the vehicle informs the operator (driver) of the vehicle on the situation that a handover of the automated control to manual control may be required or recommendable by outputting warning signals by means of visual, acoustic and/or haptic output. This may include acoustic warning signals such as beeping sounds or voice signals output by loudspeakers of the human machine interface, visual warning signals such as warning lamps or visual information output on a screen or heads-up display of the human machine interface, and/or haptic information such as vibration signals (e.g. a vibrating seat or vibrating steering wheel or the like).

For example, EP 2 848 488 A1 (also published as US 2015/0070160 A1) relates to a method for handover warning in a vehicle having autonomous driving capabilities and a vehicle controller arranged to control unmanned autonomous travel. Monitoring means are arranged to monitor if there is a need to transition from unmanned autonomous travel to manual control of the vehicle. A detecting arrangement is arranged to monitor a vehicle driver and evaluate the vehicle driver's readiness to assume the act of driving the vehicle. A warning arrangement is arranged to provide warning information when driver-handover is requested by the monitoring means, which warning arrangement is further arranged to adapt warning information timing in respect to the evaluated vehicle driver's readiness to assume the act of driving the vehicle. A warning output system is arranged to output the time adapted warning information to a vehicle passenger compartment.

A driver system of a vehicle where the driver assistance system is able to control the vehicle at least partially automatically is known from US 2015/0094899 A1, wherein warning signals are outputted to bring the driver to take over to manual control of the vehicle. Further, the outputting of the warning signals stops immediately after the driver took back the manual control of the vehicle.

Another driver supporting system is known from DE 10 2010 031 672 A1 that describes a support for driving the vehicle out of a parking space. The system drives the vehicle automatically out of the parking space until a specified state of the vehicle is reached and gives the control of the vehicle back to the driver. A further support is applied to the driver by presenting an ideal path that the driver can drive along to avoid collision with objects close to the vehicle.

However, the inventors have considered that, prior to a handover, the operator may be distracted or even be involved in distracting activities such as conversations with other people, reading a book or magazine, watching television or a movie or even be sleeping. The above prior art does not disclose and refer to the problems which this kind of operator's distraction might cause and, then, it is possible that the operator may get frightened by the unexpected warning signal or the operator may get confused by many kind of warning signals, and a safe handover may be at risk.

### Summary

According to objects of the invention, aspects and embodiments shall be provided in connection with a method for controlling a vehicle being configured to operate under automated driving control to handle a handover from an automated driving control to manual driving control by an operator of the vehicle and/or informing the operator of the vehicle on the need for a handover from an automated driving control to manual driving control, in particular in a smooth and safe manner by aiming to avoid discomfort and confusion on the side of the operator of the vehicle.

According to an exemplary aspect, and in view of solving the above objects, there is proposed a method for controlling a vehicle being configured to operate under automated driving control according to claim 1 and an apparatus for controlling a vehicle being configured to operate under automated driving control according to the respective independent claim. Dependent claims relate to preferred exemplary aspects of the invention. The present invention may also be directed to computer program products carrying (or having stored thereon) computer program instructions being adapted to cause a computer, controller or control system to execute one or more steps of a control method of aspects or exemplary embodiments described below.

According to an exemplary aspect, there may be provided a method for controlling a vehicle being configured to operate under automated driving control which may comprise: controlling a movement of the vehicle under automated driving control based on a target driving condition; monitoring, during controlling the movement of the vehicle under automated driving control, a hand-over criteria for determining whether there is a need for a hand-over from automated driving control to manual driving control by an operator of the vehicle; and/or applying, when it is determined that there is a need for a hand-over from automated driving control to manual driving control, a jerk pattern to the controlled movement of the vehicle under automated driving control.

According to an underlying idea of the invention, when the control system determines or decides that a handover from automated driving control to manual driving control is necessary, required and/or recommendable, instead of directly informing the operator/driver of the vehicle by visual, acoustic and/or haptic information, the vehicle motion is controlled by applying the jerk pattern including at least one jerk, thereby changing the vehicle motion/vehicle acceleration/vehicle speed, so that the operator may sense the changed motion of the vehicle to be stipulated to get involved in the control of the vehicle motion e.g. by actuating, touching, gripping or moving the steering wheel or by touching or actuating one of the pedals of the vehicle to accelerate or decelerate the speed of the vehicle, e.g. to counter-act the applied jerk(s) of the applied jerk pattern, or so that the driver at least gets involved by trying to obtain information such as by observing the vehicle environment, or observing or retrieving information from a human machine interface such as from output means including a screen, a heads-up display or the like.

The paying attention, observing the environment or information or the taking over of manual control by the operator may be subliminally stipulated when the driver recognizes the changed motion due to the applied jerk pattern, and the taking over by manual control completely or partially may be done more intuitively by the operator with the aim to counter-act the applied jerk(s) of the applied jerk pattern or to react to the changed motion of the vehicle, and the operator is advantageously not frightened or shocked by any visual, acoustic or haptic warning signals. That is, advantageously, the present invention enables a safer and more intuitive initialization of a handover from automated driving control to manual driving control by the operator.

According to some preferred exemplary aspects, the jerk pattern may comprise one or more jerks applied to the movement of the vehicle to change a longitudinal and/or lateral acceleration of the vehicle according to the one or more jerks.

Preferably, the jerk pattern may be applied to the controlled movement of the vehicle to stimulate the operator to take over by manual driving control. That is, the aspect may help the driver to intuitively react to the applied jerk pattern to take over control of the vehicle in a way that feels more natural based on the driver's feelings and reflexes instead of confusing the driver by any acoustic, visual or haptic output information.

According to some preferred exemplary aspects, the jerk pattern may include a first jerk which may be associated with a longitudinal motion (e.g. a longitudinal acceleration) of the vehicle and/or with a lateral motion (e.g. a lateral acceleration) of the vehicle. That is, the first jerk may - as a longitudinal jerk - be associated with increasing or decreasing a longitudinal acceleration of the vehicle, thereby changing the speed of the vehicle.

Such aspect may stipulate the operator of the vehicle to counter-act by controlling a pedal of the vehicle to either accelerate or decelerate the vehicle or to manually control the speed of the vehicle. Also, the first jerk may - as a lateral jerk - be associated with increasing or decreasing a lateral acceleration of the vehicle, thereby changing the travelling direction of the vehicle. Such aspect may stipulate the operator of the vehicle to counter-act by controlling a steering wheel of the vehicle to manually control the travelling direction of the vehicle.

According to some preferred exemplary aspects, the jerk pattern may include a second jerk which may preferably be applied after applying the first jerk, wherein the second jerk may preferably be directed into an opposite direction compared to a direction of the first jerk. This may advantageously even more likely stipulate a manual control operation by the operator, as it changes a longitudinal and/or lateral motion (e.g. longitudinal and/or lateral acceleration) of the vehicle into the opposite direction compared to the change of the longitudinal and/or lateral motion (e.g. longitudinal and/or lateral acceleration) of the vehicle according to the first jerk.

According to some preferred exemplary aspects, an absolute value of the second jerk may be larger than an absolute value of the first jerk. This may advantageously even more likely stipulate a manual control operation by the operator, as it changes a longitudinal and/or lateral motion (e.g. longitudinal and/or lateral acceleration) of the vehicle stronger into the opposite direction compared to the change of the longitudinal and/or lateral motion (e.g. longitudinal and/or lateral acceleration) of the vehicle according to the first jerk.

According to some preferred exemplary aspects, the method may further comprise: determining, during and/or after applying the jerk pattern to the controlled movement of the vehicle, whether the operator performs a manual control operation to at least partially take over by manual control, and/or outputting, when it is determined that the operator performs a manual control operation, a visual, haptical and/or acoustic information signal to the operator to indicate that a hand-over from automated driving control to manual driving control is requested.

This provides the advantage that a visual, haptical and/or acoustic information signal may be output to the operator after it has been established that the operator has already performed at least one manual control operation, such as e.g. a movement of the steering wheel and/or the actuation of a pedal of the vehicle or even just an operation on a human machine interface to observe the current situation, so that the operator is likely to already pay attention to the movement and control of the vehicle, and will not be easily shocked by the visual, haptical and/or acoustic information signal requesting them to take over by manual driving control.

According to some preferred exemplary aspects, the method may further comprise: controlling the movement of the vehicle under automated driving control such as to apply another jerk pattern to the controlled movement of the vehicle when it is determined that the operator does not perform a manual control operation. This has the advantage that the next jerk pattern may be applied, e.g. with higher jerk values compared to the previously applied jerk pattern and/or with more subsequent applied jerks, to stipulate the operator to take over or at least get involved in the driving control of the vehicle.

According to some preferred exemplary aspects, when the target driving condition corresponds to driving on a substantially straight road at a constant target speed, the applied jerk pattern may preferably include two, three or more jerks being respectively associated with a longitudinal motion (e.g. a longitudinal acceleration) of the vehicle.

It is noted that a "substantially straight road" may include straight roads or roads having curves having a respective curve radius above a specified curve radius threshold, e.g. a curve radius above 1000 meters.

According to such exemplary aspects, while the operator may be intuitively expecting that the constant target speed is held automatically, the applied jerk pattern introduces a change in the longitudinal motion/acceleration of the vehicle, e.g. acceleration or deceleration to speeds larger or smaller than the target speed, and the operator may be stipulated to act to actuate one of the pedals of the vehicle to either decelerate the vehicle speed down to the target speed again, or to accelerate the vehicle speed up to the target speed again or to counter-act the acceleration/deceleration of the vehicle.

Here, preferably, the jerk pattern may be applied to change a longitudinal motion/acceleration of the vehicle such that a travelling speed of the vehicle changes during applying the jerk pattern and reaches the target speed again after applying the jerk pattern.

Preferably, in one of the above aspects, the applied jerk pattern may include a first jerk (first motion change) to decelerate the vehicle to a speed smaller than the target speed and a second jerk (second motion change) to accelerate the vehicle again up to the target speed. For example, the applied jerk pattern may include a first jerk associated with a negative longitudinal acceleration to decelerate the vehicle to a speed smaller than the target speed, a second jerk associated with a positive longitudinal acceleration to accelerate the vehicle again up to the target speed, and/or a third jerk to cancel the positive longitudinal acceleration associated with the second jerk to control the vehicle to move again at the target speed. For example, such or similar jerk patterns may be applied if the target speed corresponds to a current speed limit.

Alternatively, or in connection with a previous or next jerk pattern applied before/after the jerk pattern described above, the applied jerk pattern may preferably include a first jerk (first motion change) to decelerate the vehicle to a speed smaller than the target speed, a second jerk (second motion change) to accelerate the vehicle to a speed larger than the target speed, and/or a third jerk (third motion change) to decelerate the vehicle again down to the target speed. For example, the applied jerk pattern may a first jerk associated with a negative longitudinal acceleration to decelerate the vehicle to a speed smaller than the target speed, a second jerk associated with a positive longitudinal acceleration to accelerate the vehicle to a speed larger than the target speed, a third jerk associated with a negative acceleration to decelerate the vehicle again down to the target speed, and/or a fourth jerk to cancel the negative longitudinal acceleration associated with the third jerk to control the vehicle to again move at the target speed. For example, such or similar jerk patterns may be applied if the target speed is less than a current speed limit.

According to some preferred exemplary aspects, when the target driving condition corresponds to driving on a substantially straight road along a substantially straight target path, the applied jerk pattern may include two, three or more jerks being respectively associated with a lateral motion/acceleration of the vehicle.

It is noted that a "substantially straight target path" may include straight target paths or curved target paths having curves having a respective curve radius above a specified curve radius threshold, e.g. a curve radius above 1000 meters.

According to such exemplary aspects, while the operator may be intuitively expecting that the straight travelling direction of the vehicle is held automatically, the applied jerk pattern introduces a change in the lateral motion/acceleration of the vehicle, e.g. steering to the left or right away from the straight target path, and the operator may be stipulated to act to actuate the steering wheel of the vehicle to bring the vehicle direction back to the straight target path according to the straight road or to counter-act the lateral acceleration of the vehicle.

Here, preferably, the jerk pattern may be applied to change a lateral acceleration of the vehicle such that a travelling direction of the vehicle changes during applying the jerk pattern and aligns with a direction in parallel with the direction according to the substantially straight target path again after applying the jerk pattern such that the vehicle moves again in parallel with the substantially straight target path after applying the jerk pattern. Even more preferably, the jerk pattern may be applied to change a lateral acceleration of the vehicle such that a travelling direction of the vehicle changes during applying the jerk pattern and exactly aligns with a direction according to the substantially straight target path again after applying the jerk pattern such that the vehicle moves again along with and into the direction of the substantially straight target path after applying the jerk pattern.

Preferably, in one of the above aspects, the applied jerk pattern may include a first lateral jerk to change the travelling direction of the vehicle towards a first lateral direction and/or a second lateral jerk to change the travelling direction of the vehicle towards a second lateral direction opposite to the first lateral direction, such that the travelling direction aligns with a direction according to the substantially straight target path again after applying the jerk pattern. For example, the applied jerk pattern may include a first jerk associated with a lateral acceleration to change the travelling direction of the vehicle towards a first lateral direction, a second jerk associated with a lateral acceleration to change the travelling direction of the vehicle towards a second lateral direction opposite to the first lateral direction, and/or a third jerk to cancel the lateral acceleration associated with the second jerk to control the vehicle such that the travelling direction aligns with a direction according to the substantially straight target path again.

Alternatively, or in connection with a next jerk pattern applied after the jerk pattern described above, the applied jerk pattern may include a first lateral jerk to change the travelling direction of the vehicle towards the first lateral direction, a second lateral jerk to change the travelling direction of the vehicle towards a second lateral direction opposite to the first lateral direction, and/or a third lateral jerk to change the travelling direction of the vehicle towards the first lateral direction, such that the travelling direction aligns with a direction according to the substantially straight target path again after applying the jerk pattern. For example, the applied jerk pattern may include a first jerk associated with a lateral acceleration to change the travelling direction of the vehicle towards the first lateral direction, a second jerk associated with a lateral acceleration to change the travelling direction of the vehicle towards a second lateral direction opposite to the first lateral direction, a third jerk associated with a lateral acceleration to change the travelling direction of the vehicle towards the first lateral direction, and/or a fourth jerk to cancel the lateral acceleration associated with the third jerk to control the vehicle such that the travelling direction aligns with a direction according to the substantially straight target path again.

According to some preferred exemplary aspects, when the target driving condition corresponds to driving on a curved road along a curved target path, the jerk pattern may preferably be applied such that a braking jerk is applied according to a negative longitudinal acceleration of the vehicle when entering a curve of the curved road at a later timing and/or larger brake force compared to the target driving condition.

According to some preferred exemplary aspects, when the target driving condition corresponds to driving on a curved road along a curved target path, the jerk pattern may preferably be applied such that an accelerating jerk is applied according to a positive longitudinal acceleration of the vehicle when exiting a curve of the curved road at a later timing and/or smaller acceleration value compared to the target driving condition.

According to some preferred exemplary aspects, when the target driving condition corresponds to driving on a curved road along a curved target path, the jerk pattern may preferably be applied such that a braking jerk is applied according to a negative longitudinal acceleration of the vehicle when entering a curve of the curved road at a later timing and/or larger brake force compared to the target driving condition (potentially followed by another jerk to cancel the deceleration during or before moving through the curve); and/or such that an accelerating jerk is applied according to a positive longitudinal acceleration of the vehicle when exiting a curve of the curved road at a later timing and/or smaller acceleration value compared to the target driving condition (potentially followed by another jerk to cancel the positive acceleration e.g. when a target speed is reached or reached again after exiting the curve).

According to another aspect, there may be provided an apparatus (such as a control unit or control system integrated in or mountable to a vehicle) for controlling a vehicle being configured to operate under automated driving control according to a control method of one or more of the above described aspects. The apparatus may be comprising: control means configured to control a movement of the vehicle under automated driving control based on a target driving condition; and/or monitoring means configured to monitor, during controlling the movement of the vehicle under automated driving control by the control means, a hand-over criteria for determining whether there is a need for a hand-over from automated driving control to manual driving control by an operator of the vehicle. The apparatus may be configured to execute any of the methods of the exemplary aspects and preferred aspects described above, or any combinations thereof.

The control means may preferably be further configured to apply, when it is determined that there is a need for a hand-over from automated driving control to manual driving control by the monitoring means, a jerk pattern to the controlled movement of the vehicle under automated driving control.

According to another aspect, there may be provided a computer program product comprising computer program means, which may include computer-readable instructions, for causing a vehicle control apparatus to execute the steps of a method as described in any one of the above first aspect and preferred aspects thereof.

In the context of the present disclosure, the term "acceleration" may refer to a derivative of speed (or velocity) with respect to time and the term jerk may refer to a derivative of acceleration with respect to time, or to a second derivative of speed (or velocity) with respect to time. Typically, if not stated otherwise, the term "acceleration" as used in the present disclosure may include positive acceleration (i.e. increasing speed) as well as negative acceleration (i.e. deceleration or reducing speed).

A lateral direction of the vehicle can also be referred to as a direction of the pitch axis of the vehicle and a longitudinal direction of the vehicle can be referred to as a direction of the roll axis of the vehicle.

Moreover, while velocity, acceleration and jerk are in general vector quantities, terms such as lateral acceleration, longitudinal acceleration, and lateral jerk are typically referringto scalar quantities such as e.g. components of vectors in a longitudinal or lateral direction respectively.

In a Cartesian coordinate system of the vehicle having the yaw, pitch and roll axes as principal axes of the coordinate system, a lateral acceleration may refer to the pitch axis coordinate of the acceleration vector and a longitudinal acceleration may refer to the roll axis coordinate of the acceleration vector. Similarly, a lateral jerk may refer to the pitch axis coordinate of the jerk vector.

In the driving control, while the longitudinal acceleration may preferably need to discriminate between positive acceleration (acceleration of the vehicle in the sense of increasing speed) and negative acceleration (deceleration) of the vehicle in the sense of decreasing speed and/or braking, the lateral acceleration does not necessarily need to discriminate between positive lateral acceleration (i.e. acceleration towards the left/right) and negative lateral acceleration (i.e. acceleration towards the right/left).

Therefore, a lateral acceleration may similarly refer to the absolute value of the pitch axis coordinate of the acceleration vector, however, then a lateral jerk may preferably refer to the derivative of the absolute value of the lateral acceleration with respect to time. On the other hand, a lateral jerk preferably again may preferably need to discriminate between positive jerk (i.e. increasing lateral acceleration) and negative jerk (i.e. decreasing lateral acceleration).

Features, components and specific details of the structures of the above-described aspects may be exchanged or combined to form further embodiments optimized for the respective application. As far as such modifications are readily apparent for an expert skilled in the art they shall be disclosed implicitly by the above description without specifying explicitly every possible combination, for the sake of conciseness of the present description.

For example, it is possible to provide further embodiments in which exemplary applied jerk patterns include or combine lateral jerks and longitudinal jerks, and/or jerks having components in the lateral and longitudinal directions.

### Brief description of figures

Fig. 1 is an exemplary diagram illustrating a method for handling handover from automated driving control to manual driving control according to aspects of the prior art;
Fig. 2 exemplarily shows a schematic diagram of a system architecture of a control system according to exemplary embodiments;
Fig. 3 exemplarily shows a schematic functional diagram of the control system according to exemplary embodiments;
Fig. 4 is an exemplary diagram illustrating a method for handling handover from automated driving control to manual driving control according to an exemplary embodiment;
Fig. 5 is an exemplary diagram illustrating a method for handling handover from automated driving control to manual driving control according to another exemplary embodiment;
Fig. 6 is an exemplary diagram illustrating a method for handling handover from automated driving control to manual driving control according to another exemplary embodiment;
Fig. 7 is an exemplary diagram illustrating a method for handling handover from automated driving control to manual driving control according to another exemplary embodiment;
Fig. 8 is an exemplary diagram illustrating a method for handling handover from automated driving control to manual driving control according to another exemplary embodiment;
Fig. 9 is an exemplary diagram illustrating a method for handling handover from automated driving control to manual driving control according to another exemplary embodiment;
Fig. 10 is an exemplary diagram illustrating a method for handling handover from automated driving control to manual driving control according to another exemplary embodiment; and
Fig. 11 is an exemplary flow chart of a method for handling handover from automated driving control to manual driving control according to some exemplary embodiments.

### Detailed description of figures and of preferred embodiments of the present invention

Preferred embodiments of the present invention will be described below with reference to the accompanying figures. The described features and aspects of the embodiments may be modified or combined to form further embodiments of the present invention.

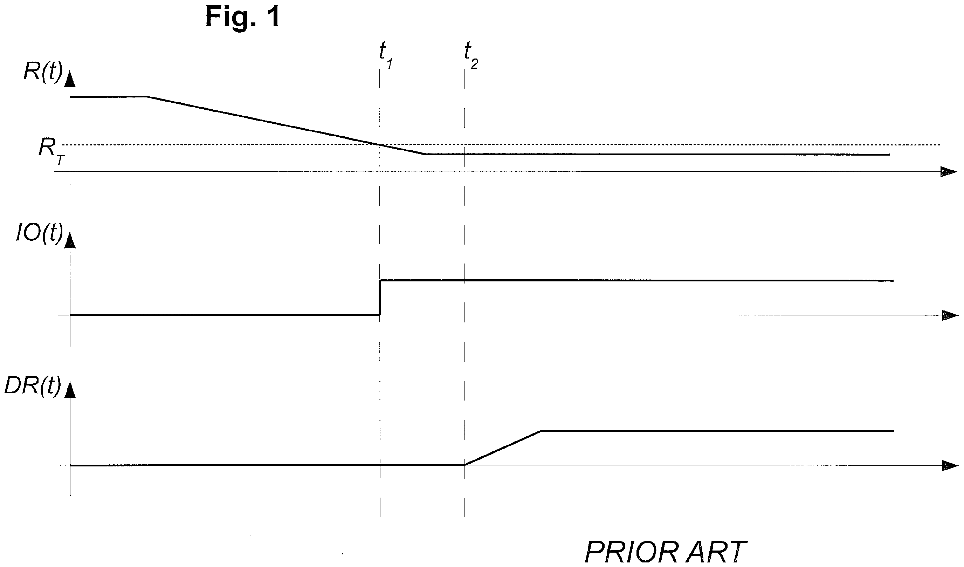

Fig. 1 is an exemplary diagram illustrating a method for handling handover from automated driving control to manual driving control according to aspects of the prior art. During automated driving control (e.g. fully autonomous driving mode in which all driving control functions including control of speed, travel direction, longitudinal and lateral acceleration of the vehicle are controlled automatically, or semi-autonomous driving mode in which at least one or more of the driving control functions including control of speed, travel direction, longitudinal and lateral acceleration of the vehicle are controlled automatically), the reliability of the automated control is monitored by the control system to monitor one or more handover criteria to determine whether a handover from automated driving control to manual driving control is required, needed or at least recommended, e.g. for reasons of safety.

Exemplarily, in Fig. 1, the reliability of the automated control is indicated by a parameter R (reliability parameter), and it is determined that a handover from automated driving control to manual driving control is required, needed or at least recommended if the reliability parameter R falls below a predetermined or pre-set threshold value R_{T}. For example, in Fig. 1, the upper diagram shows an exemplary behavior of the reliability parameter R as a function of time, i.e. R(t), wherein the reliability parameter exemplarily decreases until it falls below the threshold value R_{T} at a time t₁.

According to the prior art, as soon as it is determined that a handover criteria is met, and a handover from automated driving control to manual driving control is required, needed or at least recommended (e.g. in case the determined reliability parameter R falls below the threshold R_{T} in Fig. 1), the request of the need for handover to manual control is communicated to the operator/driver of the vehicle by outputting a warning signal or request message.

For example, it is possible that the control system outputs visual, acoustic and/or haptic information signals to inform the operator/driver of the vehicle that a handover from automated control to manual control is needed, requested or at least recommendable. Such information may include visual information such as switching on one or more lamps, outputting an image and/or a text message on a display screen of a human machine interface of the vehicle or on a heads-up display of the vehicle; acoustic information such as warning sounds or automated voice output through speakers of a human machine interface of the vehicle; and/or haptic information such as e.g. actuating vibration at one or more of: a steering wheel of the vehicle, a driver seat of the vehicle, and one or more actuator pedals of the vehicle.

In Fig. 1, the output of the warning signal is indicated by the parameter 10 as a function of time, i.e. IO(t), which is switched ON exemplarily at the time t₁ when the reliability parameter R(t) falls below the threshold R_{T}. That is, at time t₁, exemplarily, the visual, acoustic and/or haptic information signal is output to the operator/driver to inform them to take over control of the vehicle by manual control, including taking over manual control of the travelling direction of the vehicle by means of the steering wheel and/or taking over control of the speed and/or acceleration of the vehicle by means of the control pedals such as acceleration pedal and/or brake pedal.

The driver's reaction DR is exemplarily shown in Fig. 1 in the lower diagram as a function of time, i.e. DR(t), and exemplarily the driver's reaction starts at a time t₂ after the operator/driver is visually, acoustically and/or haptically informed that there is a need for take-over by manual control. That is, the driver's reaction DR(t) may be any one of getting involved in the control of the vehicle by manual control, including taking over manual control of the travelling direction of the vehicle by means of the steering wheel and/or taking over control of the speed and/or acceleration of the vehicle by means of the control pedals such as acceleration pedal and/or brake pedal.

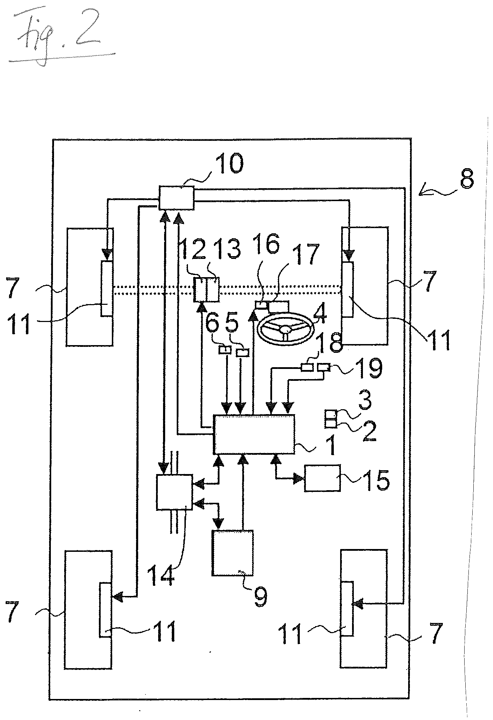

Fig. 2 exemplarily shows a schematic diagram of a system architecture of a control system according to exemplary embodiments.

The system exemplarily includes a vehicle 8 having four wheels 7 (or tires 7). Exemplarily, each of the wheels 7 has a brake actuator 11 (in other exemplary embodiments, only two wheels may be equipped with brake actuators, such as e.g. only the front wheels or only the rear wheels) configured to apply a brake force to decelerate the vehicle 8. The brake actuators 11 are exemplarily connected communicably to the brake control unit 10. The brake control unit 10 is configured to control the brake actuators 11 to apply a brake force.

Exemplarily, the upper wheels 7 in Fig. 2 are connected via an axle to a drive-torque actuator 13 which is configured to apply a driving torque to accelerate or also decelerate the vehicle 8. In some embodiments, the drive-torque actuator 13 may be configured to apply a driving torque to the front wheels, and, in some further embodiments, the drive-torque actuator 13 may be configured to apply a driving torque to the rear wheels. In even further embodiments, the drive-torque actuator 13 (or multiple drive-torque actuators) may apply torque to both the front wheels and the rear wheels (e.g. for four-wheel drive vehicles).

In some exemplary embodiments, the drive-torque actuator 13 may be driven by a combustion engine, by one or more electric motors, or also by a hybrid drive system combining a combustion engine and one or more electric motors. Exemplarily, the drive-torque actuator 13 is communicably connected to a drive-torque control unit 12 controlling the drive-torque actuator 13.

The vehicle 8 is further equipped exemplarily with a steering wheel 4 configured to allow a driver/operator of the vehicle to manually control a steering of the vehicle to control the travelling direction of the vehicle 8. For autonomous driving, the vehicle 8 exemplarily further includes a steering torque/angle control actuator 17 configured to automatically actuate and/or control the steering wheel 4 without involvement by the driver/operator. The steering torque/angle control actuator 17 is controlled by the steering torque/angle control unit 16.

The vehicle 8 (or the control system) exemplarily further includes sensors that allow to detect whether the driver/operator performs any manual control operations to control the vehicle, to take over control of the vehicle and/or to get involved in the control of the vehicle by performing one or more manual control operations such as e.g. manually actuating the steering wheel 4, the brake pedal and/or the accelerator pedal. For this purpose, the vehicle 8 includes the steering wheel angle sensor 5 detecting an angle of the steering wheel 4, the brake pedal sensor 18 detecting actuation of the brake pedal, and the accelerator pedal sensor 19 detecting actuation of the accelerator pedal.

In addition (or alternatively) to the above, the vehicle (or the control system) may also be equipped with one or more further sensors to detect psycho-physiological information on the driver's state or behavior and/or to sense information in connection with driver state recognition, in order to detect whether the driver gets involved, changes behavior, pays attention or starts to pay attention. This may include any sensors sensing that the driver operates a human machine interface so as to obtain information, or based on sensor information recognizing a psycho-physical behavior of the driver, e.g. eye movement sensors sensing that the driver visually observes an environment of the vehicle, a display of a human machine interface, a heads-up display, and/or a surrounding of the road ahead of the vehicle.

The vehicle 8 (or the control system) exemplarily further includes sensors and equipment that allow to detect a current driving situation, for example including an accelerometer 2 to detect a current lateral and/or longitudinal acceleration of the current movement of the vehicle 8, a gyro-sensor 3 to detect a current orientation of the vehicle and/or to detect a rotation of the vehicle about one or more, up to three orthogonal axes, and a position detection device 9 to determine a current position of the vehicle 8 (e.g. based on technology of a satellite navigation system such as e.g. GPS, GLONASS or the GALILEO system, and/or based on signal triangulation in one or more communication systems including cellular networks such as mobile phone networks, wireless LAN networks and/or vehicular networks).

The vehicle 8 (or the control system) exemplarily further includes sensors and equipment that allow to detect an environmental situation around the vehicle including, for example, the obstacle detect device 6 configured to detect objects or obstacles in the surrounding of the vehicle 8. The obstacle detect device 6 may be configured to detect obstacles and other vehicles ahead of the vehicle and/or to the sides of the vehicle, and may include a detection system having sensors and apparatuses such as one or more cameras, a RADAR (**Ra**dio **D**etection **a**nd **R**anging) system and/or LIDAR (Light Detection and Ranging) system to detect the presence, the position, the shape and/or the type of obstacles (e.g. other vehicles ahead, behind or located to the sides of the vehicle 8, including other vehicles travelling in the same travelling direction, into the opposite travelling direction or other traveling directions; other obstacles such as objects being positioned on a road or to sides of the road (such as e.g. pedestrians, bicycles, motorcycles, animals, etc.); lane indications; traffic signs; and/or road side structures such as guide rails and crash barriers).

It is to be noted that such obstacle detect device 6 and related sensor systems including camera, RADAR, and/or LIDAR systems may be used also to detect a course of a road ahead of the vehicle 8 for controlling the travelling direction of the vehicle 8, e.g. in support of estimating the future travelling course of the vehicle based on navigation data of a navigation system and the detected position of the vehicle 8.

The vehicle 8 (or the control system) exemplarily further includes an automated-diving control unit 1 configured to control the movement of the vehicle 8 under automated control (which may be fully autonomous driving control or semi-autonomous driving control) based on sensor information and other information such as e.g. navigation data of a navigation system. The automated-diving control unit 1 and sensors and actuators of the control system may be communicably connected via an internal communication bus line 14.

The vehicle 8 (or the control system) exemplarily further includes a human machine interface unit 15 configured to enable communication with the operator/driver of the vehicle 8 e.g. by visual, acoustic and/or haptic information.

The vehicle 8 according to the above is an exemplary embodiment of a vehicle that is configured to be controlled by automatic driving control and by manual control. Manual control may include the control of the travelling direction of the vehicle 8 by the operator/driver via manual actuation of the steering wheel 4 and/or the control of the speed and/or acceleration/deceleration of the vehicle 8 by means of manual control by the driver/operator via manual actuation of the accelerator and/or brake pedals.

Automatic control may include the control of the travelling direction of the vehicle 8 via automatic control of the steering torque/angle control actuator 17 through the steering torque/angle control unit 16 based on control commands from the automated-diving control unit 1; and/or the control of the speed and/or acceleration/deceleration of the vehicle 8 via automatic control of the drive-torque actuator 13 through the drive-torque actuator 13 based on control commands from the automated-diving control unit 1 and/or via automatic control of the brake actuators 11 through the brake control unit 10 based on control commands from the automated-diving control unit 1.

For automated control, the automated-diving control unit 1 receives sensor information and environmental information, e.g. from the accelerometer 2, the gyro-sensor 3, the steering-wheel angle sensor 5, the obstacle detect device 6, the position detect device 9, the brake pedal sensor 18, the acceleration pedal sensor 19, and/or a navigation system; also vehicle dynamics information e.g. speed and driver's input e.g. by switching to activate automated drive, etc. or the like.

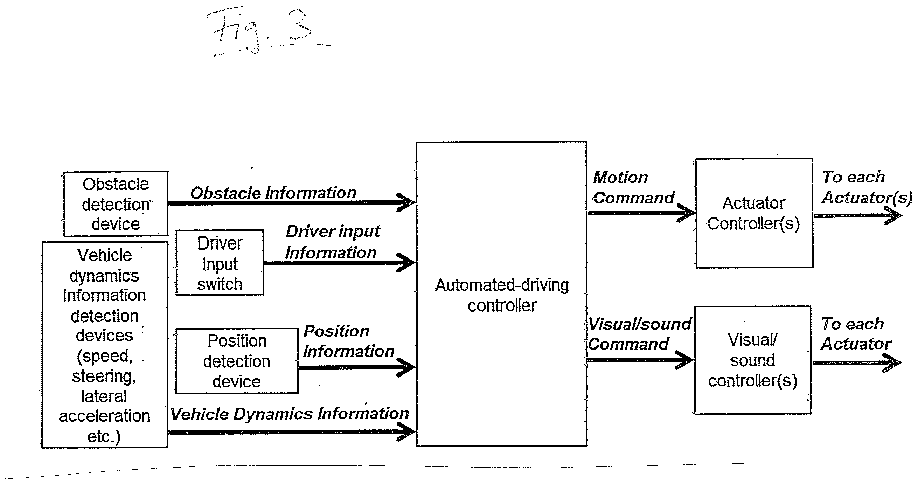

Fig. 3 exemplarily shows a schematic functional diagram of the control system according to exemplary embodiments.

The automated-driving controller as an exemplary embodiment of an apparatus in the sense of the present invention (e.g. automated driving control unit 1 in Fig. 2) receives obstacle information from an obstacle detection device (e.g. the obstacle detection device 6 in Fig. 2) informing the automated-driving controller on an environment or surroundings of the controlled vehicle, including information on obstacles and/or other vehicles.

Also, the automated driving controller further may receive position information from a position detection device (e.g. the position detect device 9 in Fig. 2) informing the automated-driving controller on the detected/determined position of the vehicle, e.g. combined with navigation data indicating a position of the vehicle in a traffic network or on a navigation map.

The automated driving controller further may receive driver input information from a driver input switch informing the automated driving controller on manual control operations performed by the driver/operator of the controlled vehicle. Also, the automated driving controller further may receive vehicle dynamics information informing the automated driving controller about a current vehicle dynamics situation of the vehicle e.g. information indicating a current speed, a current acceleration (e.g. lateral and/or longitudinal acceleration), a current steering angle, a current torque or the like, from sensors of the control system including, for example, one or more accelerometers, one or more gyro-sensors, a steering wheel angle sensor, or the like.

Based on the available information (including sensor information), the automated driving controller is configured to calculate motion commands to control actuators of the control system through their respective controllers, such as e.g. to control the drive-torque control actuator by transmitting motion commands to the drive-torque control unit, to control the brake actuators by transmitting motion commands to the brake control unit, and/or to control the steering torque/angle control actuator by transmitting the motion commands to the steering torque/angle control unit. That is, the respective actuator controllers receive motion commands from the automated driving controller to control their respective related actuators based on the received motion commands.

In addition, the automated driving controller may be configured to communicate to the driver/operator through actuators of a human machine interface (such as e.g. lamps, displays, screens, heads-up displays, loudspeakers, vibration actuators, or the like) by transmitting visual and/or acoustic output commands (and/or haptic output commands) to the controllers of the human machine interface actuators or to the human machine interface.

It is to be noted that the invention and exemplary embodiments thereof are not in any way limited to a specific type of automated driving control or autonomous driving, as long as at least one driving function of the vehicle is controlled automatically without driver's input or at least temporarily without driver's input. Also, it is to be noted that the invention and exemplary embodiments are not limited in any way to a specific type of human machine output at the human machine interface, covering any of visual, acoustic, or haptic output information, or any combination thereof, to inform the driver/operator on a need to take over control or get involved in the control of the vehicle.

The automated driving controller may include hardware including memories and processing units such as CPUs or other type of one or more processors, logical processing chips or the like, and be operated by one or more computer programs including computer-readable instructions to execute control or partial control of actuators of the vehicle based on input sensor information.

Specifically, e.g. operated by one or more processing units, according to some exemplary embodiments, the apparatus (automated controller or controller system) may include: control means configured to control a movement of the vehicle under automated driving control based on a target driving condition, and/or monitoring means configured to monitor, during controlling the movement of the vehicle under automated driving control by the control means, a hand-over criteria for determining whether there is a need for a hand-over from automated driving control to manual driving control by an operator of the vehicle: The control means may be further configured to apply, when it is determined that there is a need for a hand-over from automated driving control to manual driving control by the monitoring means, a jerk pattern to the controlled movement of the vehicle under automated driving control.

The apparatus may include or be connected to a human machine interface configured to output, when it is determined that the operator performs a manual control operation, a visual, haptical and/or acoustic information signal to the operator to indicate that a hand-over from automated driving control to manual driving control is requested. For this, the apparatus and/or the human machine interface may include means to determine, during and/or after applying the jerk pattern to the controlled movement of the vehicle, whether the operator performs a manual control operation to at least partially take over by manual control.

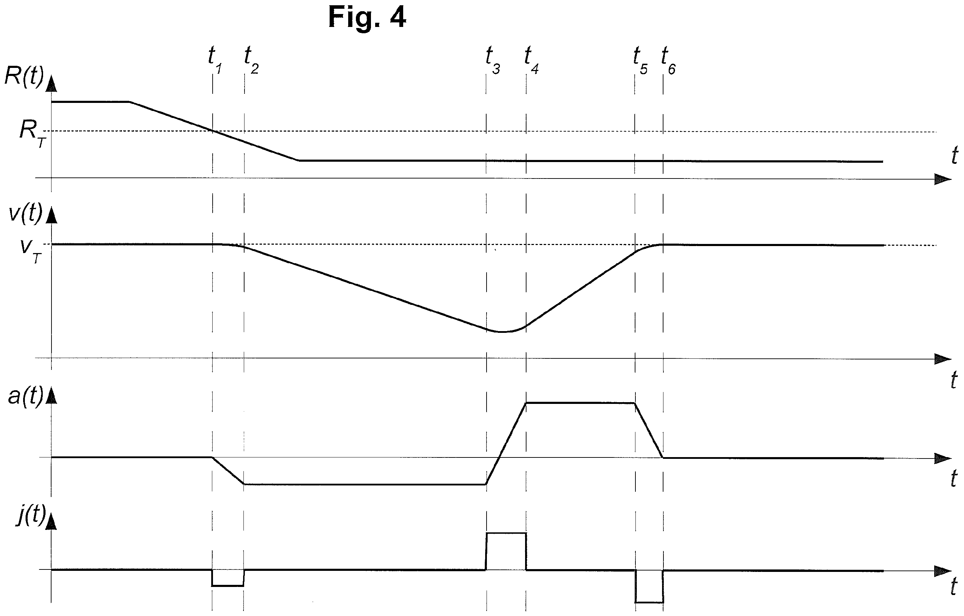

Fig. 4 is an exemplary diagram illustrating a method for handling handover from automated driving control to manual driving control according to an exemplary embodiment.

During automated driving control (e.g. fully autonomous driving mode in which all driving control functions including control of speed, travel direction, longitudinal and lateral acceleration of the vehicle are controlled automatically, or semi-autonomous driving mode in which at least one or more of the driving control functions including control of speed, travel direction, longitudinal and lateral acceleration of the vehicle are controlled automatically), the reliability of the automated control is monitored by the control system to monitor one or more handover criteria to determine whether a handover from automated driving control to manual driving control is required, needed or at least recommended, e.g. for reasons of safety.

Exemplarily, in Fig. 4, the reliability of the automated control is indicated by a parameter R (reliability parameter), and it is determined that a handover from automated driving control to manual driving control is required, needed or at least recommended if the reliability parameter R falls below a predetermined or pre-set threshold value R_{T}. For example, in Fig. 4, the upper diagram shows an exemplary behavior of the reliability parameter R as a function of time, i.e. R(t), wherein the reliability parameter R exemplarily decreases until it falls below the threshold value R_{T} at a time t₁.

It is to be noted that the comparison of one reliability parameter R with respect to a threshold value is only intended as an illustrative example, and the invention and embodiments thereof is not limited to any specific type or manner as to how a reliability of automated control is monitored or as to how it is determined whether a handover from automated driving control to automated driving control is required, recommended or needed.

The determination of a reliability of automated control may be based on multiple factors or aspects, including (but not being limited to) availability and/or reliability of sensor data (e.g. whether one or more sensors have a malfunction and/or may operate reliably, e.g. whether a camera lens is dirty or the like), availability and/or reliability of outside communication capabilities (e.g. communication with a navigation system, a satellite positioning system, a network for triangulation purposes, and/or other vehicles in a vehicular network), reliability of available information (e.g. reliability of position data e.g. depending on a number of communicably connected satellites in a satellite navigation system, or depending on whether available navigation data is up-to-date).

The reliability of the automated control may be based on the reliability of sensor information from one sensor or sensor system, or be based on a combined reliability of multiple sensors or sensor systems.

For example, relating to positioning information, if the position of the vehicle is determined by means of satellite navigation, the reliability of the position information may be decreased if the positioning signal(s) becomes weaker and/or if the number of available satellites decreases, and the reliability of the automated control depending on the detected or determined position decreases as a result.

On the other hand, if the vehicle may use multiple devices or systems to detect its position, e.g. based on satellite navigation, WIFI communication, communication to other vehicles in a vehicular network, and/or a camera system, the reliability of the automated control may significantly decrease only when the availability of satellite navigation, WIFI communication, communication to other vehicles in a vehicular network decreases, and the camera is not sufficient to detect the position.

As previously mentioned, the invention and embodiments thereof are not in any way limited to a specific manner of detecting that automated control may have become less reliable, or to a specific manner of determining whether there is a need or requirement for handover from automated control to manual control. Exemplarily, in the below exemplary embodiments, it is assumed that a criteria to determine whether there is a need for such handover of control may be based on comparison of a reliability parameter R with respect to a threshold R_{T}. This is, however, not intended to be considered limiting in any of the described exemplary embodiments.

As previously mentioned, in Fig. 4, the reliability parameter R exemplarily decreases until it falls below the threshold value R_{T} at a time t₁ indicating that there is a need for a handover from automated control to manual control by the operator/driver.

Exemplarily, it is assumed that Fig. 4 relates to controlling a movement of the vehicle under automated driving control based on a target driving condition which exemplarily corresponds to travelling along a substantially straight road at a target speed v_{T}. Accordingly, prior to the time t₁, the vehicle speed v(t) is equal to the target speed v_{T} and the longitudinal acceleration a(t) of the vehicle is zero (i.e. a constant speed is held prior to time t₁).

Exemplarily, the monitoring, during controlling the movement of the vehicle under automated driving control, of the hand-over criteria for determining whether there is a need for a hand-over from automated driving control to manual driving control by the driver/operator of the vehicle may be performed by monitoring the calculated reliability parameter R(t) compared to the threshold value R_{T}.

According to aspects of the invention or exemplary embodiments, when it is determined that there is a need for a hand-over from automated driving control to manual driving control (e.g. when it is determined that the reliability parameter R falls below the threshold R_{T} at the time t₁), the automated driving controller acts to apply a jerk pattern (see e.g. the jerk pattern of the jerk j(t) in Fig. 4).

That is, a first jerk is applied by the automated driving control unit (e.g. through the brake control unit) between times t₁ and t₂ to change the longitudinal acceleration a(t) of the vehicle to a negative value (i.e. to a negative longitudinal acceleration, or longitudinal deceleration in other words) so that the speed v(t) of the vehicle decreases below the target speed v_{T}.

This may stipulate the driver to actuate the accelerator pedal to accelerate the vehicle again and, thereby, get involved in the control of the vehicle.

If the driver does not react, at time t₃, another jerk (second jerk) of the jerk pattern is applied by the automated driving control unit (e.g. through the drive-torque control unit) between times t₃ and t₄ to change the longitudinal acceleration a(t) of the vehicle to a positive value (i.e. to a positive longitudinal acceleration, or longitudinal acceleration in other words) so that the speed v(t) of the vehicle increases again towards the target speed v_{T}. The second jerk may have a larger absolute value than the first jerk and the absolute value of the added/applied positive acceleration may be larger than the absolute value of the previous negative acceleration value, as exemplarily shown in Fig. 4.

This may stipulate the driver to actuate the brake pedal to reduce the acceleration of the vehicle and, thereby, get involved in the control of the vehicle.

If the driver does not react, at time t₅, another jerk (third jerk) of the jerk pattern is applied by the automated driving control unit to cancel the acceleration and stabilize the moving speed of the vehicle again at the target speed v_{T} e.g. to avoid that the speed of the vehicle exceeds a speed limit (e.g. if the target speed is set to or approximately to the current speed limit).

That is, in the exemplary embodiment of Fig. 4, when the target driving condition corresponds to driving on a substantially straight road at a constant target speed, the applied jerk pattern includes three jerks being respectively associated with a longitudinal acceleration of the vehicle, and the jerk pattern is applied to change a longitudinal acceleration of the vehicle such that a travelling speed of the vehicle changes during applying the jerk pattern and reaches the target speed again after applying the jerk pattern.

More specifically, the applied jerk pattern includes a first jerk associated with a negative longitudinal acceleration to decelerate the vehicle to a speed smaller than the target speed v_{T}, a second jerk associated with a positive longitudinal acceleration to accelerate the vehicle again up to the target speed v_{T}, and a third jerk to cancel the positive longitudinal acceleration associated with the second jerk to control the vehicle to move again at the target speed v_{T}.

An underlying idea is to indicate to the driver/operator of the vehicle that there is a need of a handover from automated control to manual control by motion information, i.e. by controlling movement of the vehicle such that the operator/driver is intuitively stipulated to get involved into the control of the vehicle. If the driver/operator does not react after applying the jerk pattern, the jerk pattern may be repeated.

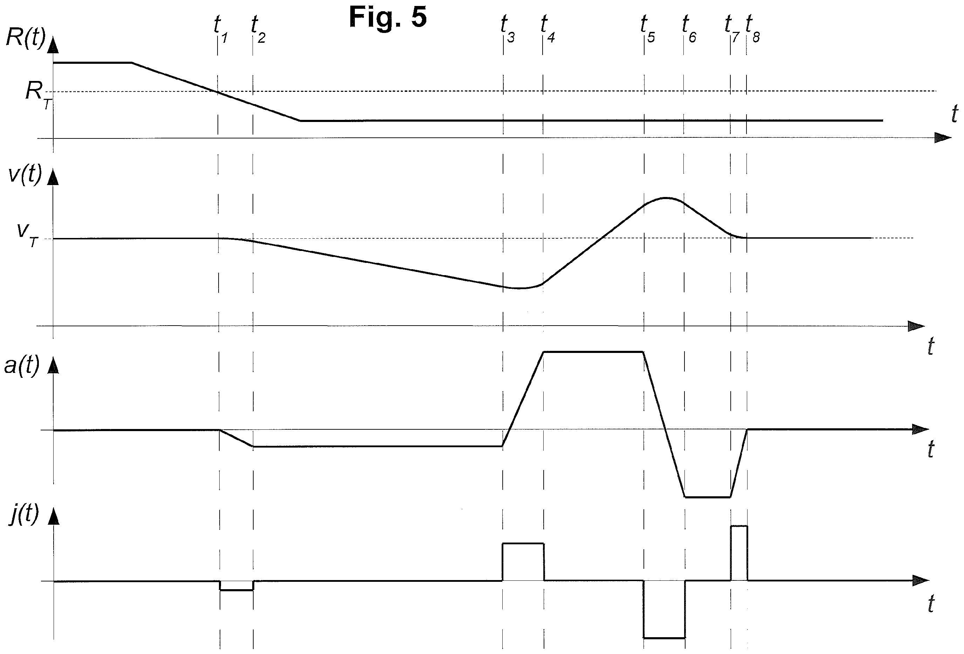

Fig. 5 is an exemplary diagram illustrating a method for handling handover from automated driving control to manual driving control according to another exemplary embodiment.

Also in Fig. 5, the reliability parameter R exemplarily decreases until it falls below the threshold value R_{T} at a time t₁ indicating that there is a need for a handover from automated control to manual control by the operator/driver.

Exemplarily, it is assumed that also Fig. 5 relates to controlling a movement of the vehicle under automated driving control based on a target driving condition which exemplarily corresponds to travelling along a substantially straight road at a target speed v_{T} and v_{T} exemplarily may be less than a current speed limit. Accordingly, prior to the time t₁, the vehicle speed v(t) is equal to the target speed v_{T} and the longitudinal acceleration a(t) of the vehicle is zero (i.e. a constant speed is held prior to time t₁).

According to aspects of the invention or exemplary embodiments, when it is determined that there is a need for a hand-over from automated driving control to manual driving control (e.g. when it is determined that the reliability parameter R falls below the threshold R_{T} at the time t₁), the automated driving controller acts to apply a jerk pattern (see e.g. the jerk pattern of the jerk j(t) in Fig. 5).

That is, a first jerk is applied by the automated driving control unit (e.g. through the brake control unit) between times t₁ and t₂ to change the longitudinal acceleration a(t) of the vehicle to a negative value (i.e. to a negative longitudinal acceleration, or longitudinal deceleration in other words) so that the speed v(t) of the vehicle decreases below the target speed v_{T}.

This may stipulate the driver to actuate the accelerator pedal to accelerate the vehicle again and, thereby, get involved in the control of the vehicle.

If the driver does not react, at time t₃, another jerk (second jerk) of the jerk pattern is applied by the automated driving control unit (e.g. through the drive-torque control unit) between times t₃ and t₄ to change the longitudinal acceleration a(t) of the vehicle to a positive value (i.e. to a positive longitudinal acceleration, or longitudinal acceleration in other words) so that the speed v(t) of the vehicle increases again towards the target speed v_{T} and to speeds larger than the target speed v_{T}. The second jerk may have a larger absolute value than the first jerk and the absolute value of the added/applied positive acceleration may be larger than the absolute value of the previous negative acceleration value, as exemplarily shown in Fig. 5.

This may stipulate the driver to actuate the brake pedal to reduce the acceleration of the vehicle e.g. to avoid that the speed of the vehicle may exceed the target speed v_{T}, and, thereby, get involved in the control of the vehicle.

If the driver does not react, at time t₅, another jerk (third jerk) of the jerk pattern is applied by the automated driving control unit between times t₅ and t₆ to change the longitudinal acceleration a(t) of the vehicle to a negative value again (i.e. to a negative longitudinal acceleration, or longitudinal deceleration in other words) so that the speed v(t) of the vehicle decreases again towards the target speed v_{T}.

This may stipulate the driver to actuate the accelerator pedal to accelerate the vehicle again and, thereby, get involved in the control of the vehicle.

If the driver does not react, at time t₇, another jerk (fourth jerk) of the jerk pattern is applied by the automated driving control unit between times t₇ and t₈ to cancel the negative acceleration and stabilize the moving speed of the vehicle again at the target speed v_{T}.

That is, in the exemplary embodiment of Fig. 5, when the target driving condition corresponds to driving on a substantially straight road at a constant target speed, the applied jerk pattern includes four jerks being respectively associated with a longitudinal acceleration of the vehicle, and the jerk pattern is applied to change a longitudinal acceleration of the vehicle such that a travelling speed of the vehicle changes during applying the jerk pattern and reaches the target speed again after applying the jerk pattern.

More specifically, the applied jerk pattern includes a first jerk associated with a negative longitudinal acceleration to decelerate the vehicle to a speed smaller than the target speed v_{T}, a second jerk associated with a positive longitudinal acceleration to accelerate the vehicle to a speed larger than the target speed v_{T}, a third jerk associated with a negative acceleration to decelerate the vehicle again down to the target speed v_{T}, and a fourth jerk to cancel the negative longitudinal acceleration associated with the third jerk to control the vehicle to again move at the target speed v_{T}.

An underlying idea is to indicate to the driver/operator of the vehicle that there is a need of a handover from automated control to manual control by motion information, i.e. by controlling movement of the vehicle such that the operator/driver is intuitively stipulated to get involved into the control of the vehicle. If the driver/operator does not react after applying the jerk pattern, the jerk pattern may be repeated.

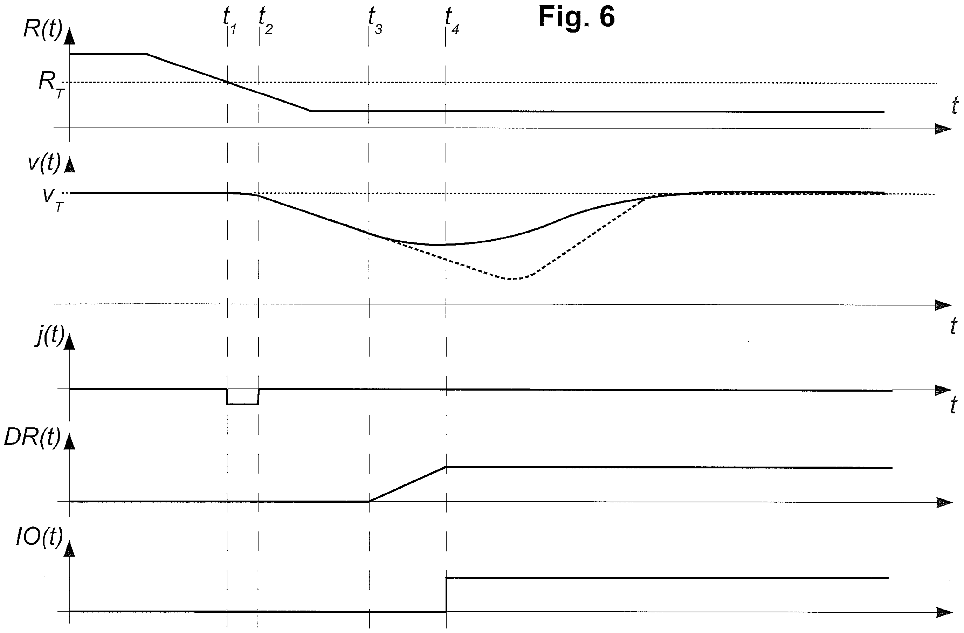

Fig. 6 is an exemplary diagram illustrating a method for handling handover from automated driving control to manual driving control according to another exemplary embodiment.

Exemplarily, Fig. 6 corresponds to a similar situation compared to Fig. 4, and the first jerk of the jerk pattern is applied similarly between times t₁ and t₂. The dashed line in the diagram for the vehicle speed v(t) corresponds to the behavior of the vehicle speed according to Fig. 4. However, it is exemplarily assumed that the driver/operator reacts after time t₂ to actuate the accelerator pedal at a later time t₃ but prior to a time of automatically applying the second jerk in Fig. 4 above.

That is, exemplarily it is assumed that the first jerk and the resulting negative longitudinal acceleration of the vehicle motion stipulated the operator/driver to accelerate the vehicle again up to the target speed v_{T} by getting involved in the control of the vehicle by the manual control operation of manually actuating the accelerator pedal at the time t₃ in Fig. 6.

This is exemplarily indicated by the driver reaction DR(t) in Fig. 6, i.e. the driver shows a reaction and the driver reaction may be sensed by the accelerator pedal sensor and determined at the automated driving control unit based on the sensor signal from the accelerator pedal sensor.

According to the exemplary embodiment of Fig. 6, sensing the driver reaction can be used to trigger an output of a warning signal (or handover information signal) at time t₄ (see information output IO(t) in Fig. 6), wherein the automated driving control unit may instruct the human machine interface to output a visual, acoustic and/or haptic information to the driver/operator to indicate visually, acoustically and/or haptically that they need to take over control of the vehicle by manual control.

However, as the sensing of the actual driver reaction is based on a performed manual control operation at time t₃, the method has the advantage that the driver/operator is already paying attention to the control of the vehicle at the time t₄ of outputting the visual, acoustic and/or haptic information signal to indicate that a handover from automated control to manual control is needed, required, requested or recommended.

Consequently, the driver/operator will not likely be confused or distracted, and it is highly likely that the driver/operator is paying attention and will not easily be confused so that a safe handover to manual control is advantageously possible.

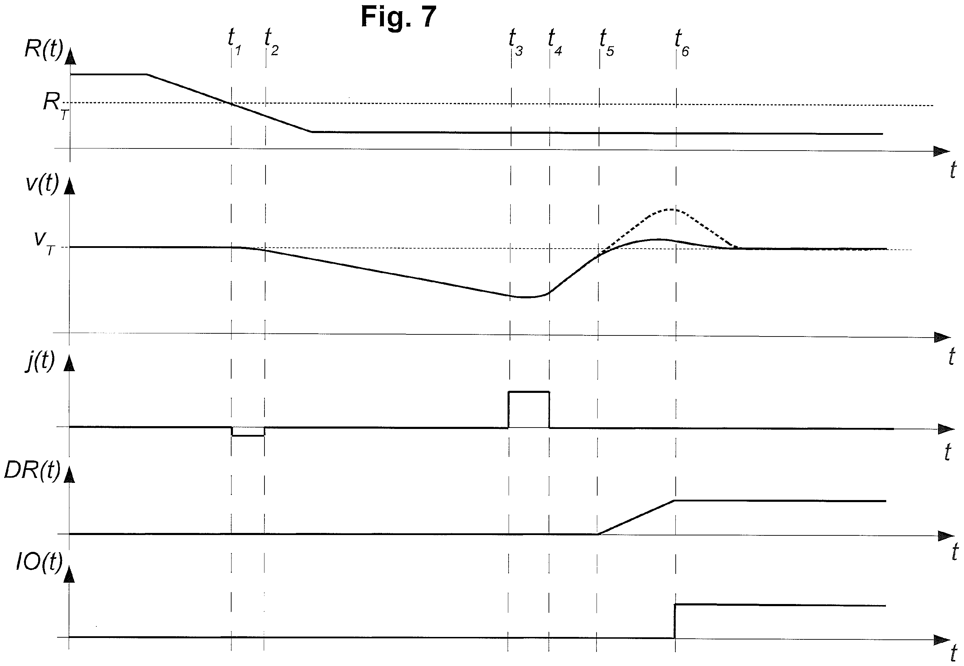

Fig. 7 is an exemplary diagram illustrating a method for handling handover from automated driving control to manual driving control according to another exemplary embodiment.

Exemplarily, Fig. 7 corresponds to a similar situation compared to Fig. 5, and the first jerk of the jerk pattern is applied similarly between times t₁ and t₂, and the second jerk is applied similarly between times t₃ and t₄. The dashed line in the diagram for the vehicle speed v(t) corresponds to the behavior of the vehicle speed according to Fig. 5. However, it is exemplarily assumed that the driver/operator reacts after time t₄ to actuate the brake pedal at a later time t₅ but prior to a time of automatically applying the third jerk in Fig. 5 above.

That is, exemplarily it is assumed that the second jerk and the resulting positive longitudinal acceleration of the vehicle motion stipulated the operator/driver to decelerate the vehicle again or at least to cancel the positive acceleration for avoiding that the vehicle speed may exceed the target speed v_{T} by getting involved in the control of the vehicle by the manual control operation of manually actuating the brake pedal at the time t₅ in Fig. 7.

According to the exemplary embodiment of Fig. 7, sensing the driver reaction can be used to trigger an output of a warning signal (or handover information signal) at time t₆ (see information output IO(t) in Fig. 7), wherein the automated driving control unit may instruct the human machine interface to output a visual, acoustic and/or haptic information to the driver/operator to indicate visually, acoustically and/or haptically that they need to take over control of the vehicle by manual control.

However, as the sensing of the actual driver reaction is based on a performed manual control operation at time t₅, the method has the advantage that the driver/operator is already paying attention to the control of the vehicle at the time t₆ of outputting the visual, acoustic and/or haptic information signal to indicate that a handover from automated control to manual control is needed, required, requested or recommended.

Consequently, the driver/operator will not likely be confused or distracted, and it is highly likely that the driver/operator is paying attention and will not easily be confused so that a safe handover to manual control is advantageously possible.

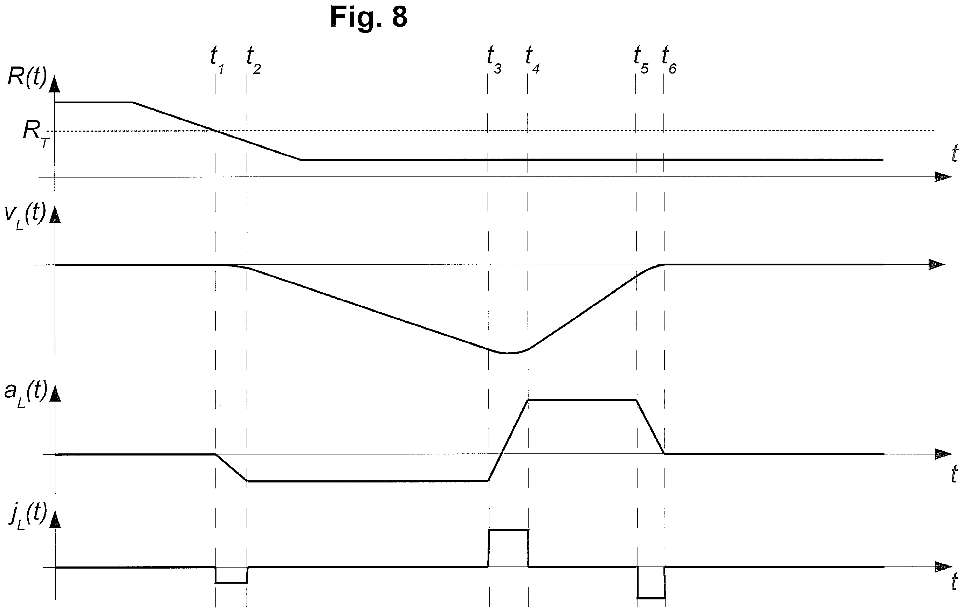

Fig. 8 is an exemplary diagram illustrating a method for handling handover from automated driving control to manual driving control according to another exemplary embodiment.

Also in Fig. 8, the reliability parameter R exemplarily decreases until it falls below the threshold value R_{T} at a time t₁ indicating that there is a need for a handover from automated control to manual control by the operator/driver.

Exemplarily, it is assumed that Fig. 8 relates to controlling a movement of the vehicle under automated driving control based on a target driving condition which exemplarily corresponds to travelling along a substantially straight road along a substantially straight target path.

Accordingly, prior to the time t₁, the lateral component of the vehicle speed v_{L}(t) is equal to zero and the lateral acceleration a_{L}(t) of the vehicle is zero as well (i.e. the travelling direction of the vehicle is controlled to be kept straight along the straight target path prior to time t₁).

According to aspects of the invention or exemplary embodiments, when it is determined that there is a need for a hand-over from automated driving control to manual driving control (e.g. when it is determined that the reliability parameter R falls below the threshold R_{T} at the time t₁), the automated driving controller acts to apply a jerk pattern (see e.g. the jerk pattern of the lateral jerk j_{L}(t) in Fig. 8).

In contrast to Figs. 4 to 7 above which indicated longitudinal components of the vehicle speed, the acceleration (longitudinal acceleration) and the jerks (longitudinal jerks) of the jerk pattern(s), in the exemplary embodiments according to Fig. 8, the illustrated curves indicate lateral components, i.e. a lateral component of the vehicle velocity v_{L}(t) (with respect to the straight target path), a lateral component of the vehicle acceleration (lateral acceleration) a_{L}(t), and a respective lateral component of the jerk (lateral jerk) or jerk pattern j_{L}(t).

Preferably, the jerk pattern(s) is/are applied such as to change a lateral motion of the vehicle such that the vehicle performs minor or small turning motions to lateral sides to slightly deviate from the straight target path, however, by returning to a travelling direction in parallel or even more preferably exactly aligning again with the straight target path. For example, the jerk pattern may be applied so that the travelling direction of the vehicle exactly aligns again with the straight target path after applying the jerk pattern once, or the jerk pattern may be applied so that the travelling direction of the vehicle aligns with a path in parallel with the straight target path after applying the jerk pattern once and exactly aligns again with the straight target path after applying the jerk pattern another time (e.g. by a jerk pattern according to Fig. 8 below, and a second jerk pattern similar to Fig. 8 but applied into an opposite lateral direction).

The lateral jerks and lateral acceleration in Fig. 8 may be controlled by control of the steering torque/angle control unit and steering torque/angle actuator, and/or the difference of braking/driving torque of the left side wheels and right side wheels.

In Fig. 8, when it is determined that the reliability parameter R falls below the threshold R_{T} at the time t₁, a first lateral jerk is applied by the automated driving control unit (e.g. through the steering torque/angle control unit) between times t₁ and t₂ to change the lateral acceleration a_{L}(t) of the vehicle to a negative value so that the lateral component of the speed v_{L}(t) of the vehicle deviates from zero and the vehicle turns slightly to one side away from the straight target path, i.e. the travelling direction of the vehicle starts to slightly deviate from the direction of the straight target path.

This may stipulate the driver to actuate the steering wheel to change the travelling direction of the vehicle back to a direction parallel to the direction of the straight target path and, thereby, get involved in the control of the vehicle.

If the driver does not react, at time t₃, another lateral jerk (second jerk) of the jerk pattern is applied by the automated driving control unit (e.g. through the steering torque/angle control unit) between times t₃ and t₄ to change the lateral acceleration a_{L}(t) of the vehicle to a positive value so that the lateral component of the speed v_{L}(t) of the vehicle approaches zero again and the vehicle turns back towards the direction of the straight target path. The second jerk may have a larger absolute value than the first jerk and the absolute value of the added/applied lateral acceleration may be larger than the absolute value of the previous lateral acceleration value in the other lateral direction, as exemplarily shown in Fig. 8.

This may stipulate the driver to actuate the steering wheel to change the travelling direction of the vehicle and, thereby, get involved in the control of the vehicle.

If the driver does not react, at time t₅, another jerk (third jerk) of the jerk pattern is applied by the automated driving control unit to cancel the lateral acceleration and stabilize the travelling direction of the vehicle again at a direction parallel to the direction of the straight target path.

That is, in the exemplary embodiment of Fig. 8, when the target driving condition corresponds to driving on a substantially straight road along a substantially straight target path, the applied jerk pattern includes three jerks being respectively associated with a lateral acceleration of the vehicle, and the jerk pattern is applied to change a lateral acceleration of the vehicle such that a travelling direction of the vehicle changes during applying the jerk pattern and aligns in parallel with a direction according to the substantially straight target path again after applying the jerk pattern.

More specifically, the applied jerk pattern includes a first jerk associated with a lateral acceleration to change the travelling direction of the vehicle towards a first lateral direction, a second jerk associated with a lateral acceleration to change the travelling direction of the vehicle towards a second lateral direction opposite to the first lateral direction, and a third jerk to cancel the lateral acceleration associated with the second jerk to control the vehicle such that the travelling direction aligns in parallel with a direction according to the substantially straight target path again.

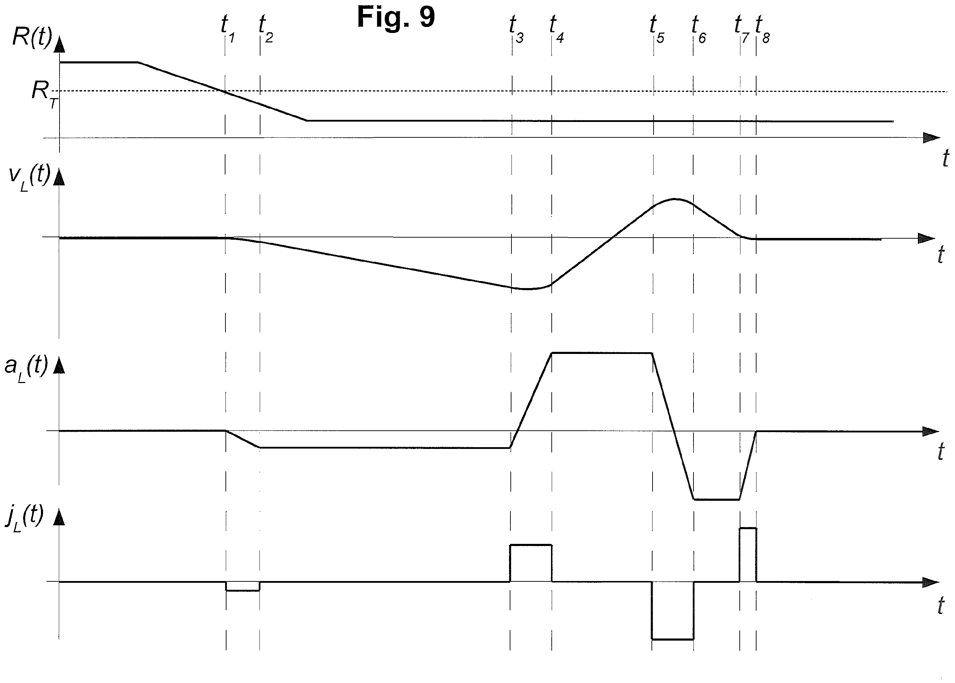

Fig. 9 is an exemplary diagram illustrating a method for handling handover from automated driving control to manual driving control according to another exemplary embodiment.

Exemplarily, it is assumed that Fig. 9 relates to controlling a movement of the vehicle under automated driving control based on a target driving condition which exemplarily corresponds to travelling along a substantially straight road along a substantially straight target path, similar to the exemplary embodiments of Fig. 8.

Accordingly, prior to the time t₁, the lateral component of the vehicle speed v_{L}(t) is equal to zero and the lateral acceleration a_{L}(t) of the vehicle is zero as well (i.e. the travelling direction of the vehicle is controlled to be kept straight along the straight target path prior to time t₁).

According to aspects of the invention or exemplary embodiments, when it is determined that there is a need for a hand-over from automated driving control to manual driving control (e.g. when it is determined that the reliability parameter R falls below the threshold R_{T} at the time t₁), the automated driving controller acts to apply a jerk pattern (see e.g. the jerk pattern of the lateral jerk j_{L}(t) in Fig. 9).

Similar to Fig. 8 above, in the exemplary embodiments according to Fig. 9, the illustrated curves indicate lateral components, i.e. a lateral component of the vehicle velocity v_{L}(t) (with respect to the straight target path), a lateral component of the vehicle acceleration (lateral acceleration) a_{L}(t), and a respective lateral component of the jerk (lateral jerk) or jerk pattern j_{L}(t).

The lateral jerks and lateral acceleration in Fig. 9 may be controlled by control of the steering torque/angle control unit and steering torque/angle actuator, and/or the difference of braking/driving torque of the left side wheels and right side wheels.

In Fig. 9, when it is determined that the reliability parameter R falls below the threshold R_{T} at the time t₁, a first lateral jerk is applied by the automated driving control unit (e.g. through the steering torque/angle control unit) between times t₁ and t₂ to change the lateral acceleration a_{L}(t) of the vehicle to a negative value so that the lateral component of the speed v_{L}(t) of the vehicle deviates from zero and the vehicle turns slightly to one side away from the straight target path, i.e. the travelling direction of the vehicle starts to slightly deviate from the direction of the straight target path.

This may stipulate the driver to actuate the steering wheel to change the travelling direction of the vehicle back to a direction parallel to the direction of the straight target path and, thereby, get involved in the control of the vehicle.

If the driver does not react, at time t₃, another lateral jerk (second jerk) of the jerk pattern is applied by the automated driving control unit (e.g. through the steering torque/angle control unit) between times t₃ and t₄ to change the lateral acceleration a_{L}(t) of the vehicle to a positive value so that the lateral component of the speed v_{L}(t) of the vehicle approaches zero again and increases further, i.e. the direction of the travelling direction of the vehicle turns to the opposite side with respect to the direction of the straight target path.

This may stipulate the driver to actuate the steering wheel to change the travelling direction of the vehicle back to a direction parallel to the direction of the straight target path and, thereby, get involved in the control of the vehicle.

If the driver does not react, at time t₅, another lateral jerk (third jerk) of the jerk pattern is applied by the automated driving control unit (e.g. through the steering torque/angle control unit) between times t₅ and t₆ to change the lateral acceleration a_{L}(t) of the vehicle to a negative value again so that the lateral component of the speed v_{L}(t) of the vehicle approaches zero again and the vehicle turns back towards the direction of the straight target path.

This may stipulate the driver to actuate the steering wheel to change the travelling direction of the vehicle and, thereby, get involved in the control of the vehicle.

If the driver does not react, at time t₇, another jerk (fourth jerk) of the jerk pattern is applied by the automated driving control unit to cancel the lateral acceleration and stabilize the travelling direction of the vehicle again at a direction parallel to the direction of the straight target path.

That is, in the exemplary embodiment of Fig. 9, when the target driving condition corresponds to driving on a substantially straight road along a substantially straight target path, the applied jerk pattern includes four jerks being respectively associated with a lateral acceleration of the vehicle, and the jerk pattern is applied to change a lateral acceleration of the vehicle such that a travelling direction of the vehicle changes during applying the jerk pattern and aligns in parallel with a direction according to the substantially straight target path again after applying the jerk pattern.

More specifically, the applied jerk pattern includes a first jerk associated with a lateral acceleration to change the travelling direction of the vehicle towards the first lateral direction, a second jerk associated with a lateral acceleration to change the travelling direction of the vehicle towards a second lateral direction opposite to the first lateral direction, a third jerk associated with a lateral acceleration to change the travelling direction of the vehicle towards the first lateral direction, and a fourth jerk to cancel the lateral acceleration associated with the third jerk to control the vehicle such that the travelling direction aligns in parallel with a direction according to the substantially straight target path again.

In the exemplary embodiments according to Fig. 9, it may be preferable that the respective jerk pattern is applied such that the integral of the lateral velocity becomes zero (i.e. that the lateral position (e.g. x_{L} = 0 with respect to the target path) after applying the jerk pattern is equal to the lateral position before applying the jerk pattern, i.e. that the area above the curve of v_{L} in Fig. 9 when v_{L} is negative exemplarily and the area below the curve of v_{L} in Fig. 9 when v_{L} is positive exemplarily are of equal size (but with opposite sign) to cancel out. By such exemplary control, a control can be advantageously applied in which the vehicle exactly follows the target path again with respect to direction and lateral position on the road.

It is to be noted that in some exemplary embodiments, when the driver performs a manual control operation, e.g. by operating the steering wheel and/or any of the control pedals, during the time when the jerk patterns are applied in Figs. 8 and 9, such driver reaction may be used to trigger that a warning signal or request signal (e.g. an acoustic, visual and/or haptic human machine interface output 10 e.g. as in the exemplary embodiments of Figs. 6 and 7 above) to inform the driver/operator that there is a need for handover from automated driving control to manual driving control.

That is, in some exemplary embodiments, sensing the driver reaction can be used to trigger an output of a warning signal (or handover information signal), wherein the automated driving control unit may instruct the human machine interface to output a visual, acoustic and/or haptic information to the driver/operator to indicate visually, acoustically and/or haptically that they need to take over control of the vehicle by manual control.

However, as the sensing of the actual driver reaction is based on a performed manual control operation, the method has the advantage that the driver/operator is already paying attention to the control of the vehicle at the time of outputting the visual, acoustic and/or haptic information signal to indicate that a handover from automated control to manual control is needed, required, requested or recommended.

Consequently, the driver/operator will not likely be confused or distracted, and it is highly likely that the driver/operator is paying attention and will not easily be confused so that a safe handover to manual control is advantageously possible.

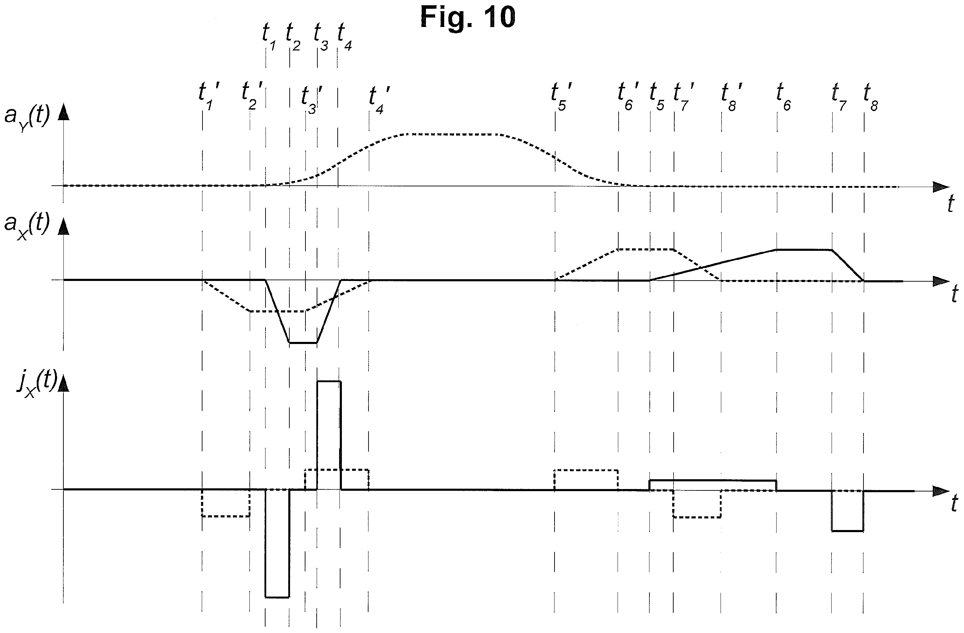

Fig. 10 is an exemplary diagram illustrating a method for handling handover from automated driving control to manual driving control according to another exemplary embodiment.

Exemplarily, it is assumed that Fig. 10 relates to controlling a movement of the vehicle under automated driving control based on a target driving condition which exemplarily corresponds to travelling along a curved road. Specifically, Fig. 10 illustrates exemplarily the lateral acceleration a_{Y}(t) of the vehicle while driving through a curve of a curved road (upper diagram), a controlled longitudinal acceleration ax(t) of the vehicle while driving through the curve (middle diagram), and a corresponding applied jerk pattern of the longitudinal jerk jx(t) of the vehicle while driving through the curve (lower diagram).

The dashed lines in Fig. 10 relate to a normal target driving condition of the automated driving control for controlling movement of the vehicle while traveling through the curve. At first, prior to the entry of the curve, it is assumed that the vehicle approached the entry of the curve at constant speed in a straight travelling direction. So, the lateral acceleration a_{Y}(t) of the vehicle, the longitudinal acceleration ax(t) of the vehicle, and the longitudinal jerk jx(t) of the vehicle remain zero while the vehicle approaches the curve entry (i.e. at times prior to time t₁' in Fig. 10).

Between times t₁' and t₂' as well as between times t₃' and t₄', the jerks are applied according to a target driving condition, so that the vehicle is appropriately decelerated during the time period of times t₁' and t₄' in which the vehicle undergoes a negative longitudinal acceleration (i.e. deceleration) ax, to appropriately reduce the vehicle speed on the entry into the curve.

Also, when entering the curve, the travelling direction of the vehicle is controlled along the curved path of the road and, as a consequence, the lateral acceleration a_{Y} increases and then decreases again towards the exit of the curve. After exiting the curve, when the vehicle is travelling on a straight road portion again, the lateral acceleration a_{Y} becomes zero again.

In addition, between times t₅' and t₆' as well as between times t₇' and t₈', the jerks are applied according to the target driving condition, so that the vehicle is appropriately accelerated again during the time period of times t₅' and t₈' in which the vehicle undergoes a positive longitudinal acceleration ax, to appropriately increase the vehicle speed again at and beyond the exit of the curve.

Assuming that it is determined that there is a need for a hand-over from automated driving control to manual driving control (e.g. when it is determined that the reliability parameter R falls below the threshold R_{T} at the time t₁), the automated driving controller acts to apply another jerk pattern instead of the jerk pattern according to the target driving condition (as illustrated by the dashed curves in Fig. 10). Specifically, the solid curves in Fig. 10 relate to another exemplary embodiment of applying a jerk pattern to indicate to the operator/driver a need for a handover from automated control to manual control.

Specifically, a first (longitudinal) jerk of the jerk pattern is exemplary applied between times t₁ and t₂ at a later time compared to the target driving condition (i.e. t₁ > t₁') and at a larger absolute value of jerk compared to the target driving condition (i.e. compared to the dashed line jerk between times t₁' and t₂') and a second jerk is applied between times t₃ and t₄ to cancel the deceleration again. As a result, a negative longitudinal acceleration (deceleration) to reduce the vehicle speed on entry into the curve is exemplarily carried out later and a larger brake force compared to the target driving condition.

This may stipulate a driver reaction or stipulate the driver to actuate the steering wheel or one of the pedals of the vehicle and, thereby, get involved in the control of the vehicle.

At the exit of the curve, a third (longitudinal) jerk of the jerk pattern is exemplary applied between times t₅ and t₆ at a later time compared to the target driving condition (i.e. t₅ > t₅') and at a smaller absolute value of jerk compared to the target driving condition (i.e. compared to the dashed line jerk between times t₅' and t₆') and a fourth jerk is applied between times t₇ and t₆ to cancel the acceleration again. As a result, a positive longitudinal acceleration to increase the vehicle speed at the exit of the curve is exemplarily carried out later and a smaller acceleration compared to the target driving condition.

This may stipulate a driver reaction or stipulate the driver to actuate the steering wheel or one of the pedals of the vehicle and, thereby, get involved in the control of the vehicle. Specifically, the driver/operator may be stipulated to actuate the accelerator pedal earlier (e.g. prior to time t₅) or stronger to control the vehicle manually to accelerate earlier or stronger after exiting the curve.

That is, in the exemplary embodiment of Fig. 10, when the target driving condition corresponds to driving on a curved road along a curved target path, and the jerk pattern is exemplarily applied such that a first jerk is applied according to a negative longitudinal acceleration of the vehicle when entering a curve of the curved road at a later timing and/or larger brake force compared to the target driving condition, and/or the jerk pattern is applied such that a second jerk is applied according to a positive longitudinal acceleration of the vehicle when exiting a curve of the curved road at a later timing and/or smaller acceleration value compared to the target driving condition.

It is to be noted that in some exemplary embodiments, when the driver performs a manual control operation, e.g. by operating the steering wheel and/or any of the control pedals, during the time when the jerk patterns are applied in Fig. 10, such driver reaction may be used to trigger that a warning signal or request signal (e.g. an acoustic, visual and/or haptic human machine interface output 10 e.g. as in the exemplary embodiments of Figs. 6 and 7 above) to inform the driver/operator that there is a need for handover from automated driving control to manual driving control.

That is, in some exemplary embodiments, sensing the driver reaction can be used to trigger an output of a warning signal (or handover information signal), wherein the automated driving control unit may instruct the human machine interface to output a visual, acoustic and/or haptic information to the driver/operator to indicate visually, acoustically and/or haptically that they need to take over control of the vehicle by manual control.

However, as the sensing of the actual driver reaction is based on a performed manual control operation, the method has the advantage that the driver/operator is already paying attention to the control of the vehicle at the time of outputting the visual, acoustic and/or haptic information signal to indicate that a handover from automated control to manual control is needed, required, requested or recommended.

Consequently, the driver/operator will not likely be confused or distracted, and it is highly likely that the driver/operator is paying attention and will not easily be confused so that a safe handover to manual control is advantageously possible.

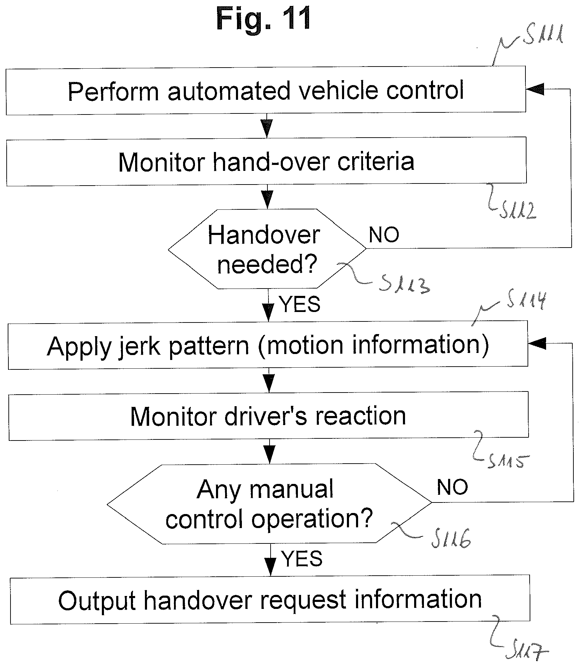

Fig. 11 is an exemplary flow chart of a method for handling handover from automated driving control to manual driving control according to some exemplary embodiments.

At first, in a step S111, the vehicle is controlled under automated driving control, e.g. according to autonomous driving or semi-autonomous driving, based on a target driving condition (e.g. driving on a straight or substantially straight road at a constant target speed and/or along a straight target path; or driving along a curved path on a curved road).

In a step S112, a hand-over criteria is monitored, e.g. during performing the automated driving control of the vehicle, to determine whether there is a need for a hand-over from automated driving control to manual driving control by the operator/driver of the vehicle in step S113. For example, similar to some exemplary embodiments above, it is conceivable that a reliability parameter is calculated and monitored, and it is determined that there is a need for a hand-over from automated driving control to manual driving control if the calculated reliability parameter falls below a threshold.

In case there is currently no need for such hand-overto manual control, i.e. if step S113 returns NO, the automated driving control is continued based on the target driving condition (and the method continues with steps S111 and S112 again). However, if it is determined that there is a need for a hand-over from automated driving control to manual driving control, i.e. step S113 returns YES, the method continues to apply a jerk pattern to change the lateral and/or longitudinal acceleration of the vehicle departing from the regular controlled acceleration and control so as to stipulate the operator of the vehicle to at least partially take over by manual control by performing at least one manual control operations such as actuation of the steering wheel and/or actuation of one of the control pedals of the vehicle.

In other words, according to some exemplary embodiments, a jerk pattern is automatically applied in step S114 as a sort of motion information (i.e. information conveyed to the operator through controlling a motion of the vehicle), wherein the motion information may be suited to intuitively stipulate the operator to get involved in the control of the vehicle. For examples of jerk patterns according to some embodiments, reference is made to above exemplary embodiments.

In step S115, it is monitored whether the operator/driver shows any kind of control reaction to get involved in the control of the vehicle, e.g. by sensing whether the operator/driver operates at least one of the steering wheel, the brake pedal and the accelerator pedal to determine whether the operator/driver performs a manual control operation in response to the motion information/applied jerk pattern (step S116).

If the operator/driver does not perform any manual control operation (step S116 returns NO), the method may proceed with applying another jerk pattern (return to and repeat step S114). This may include increasing the absolute values of the applied jerks of the next jerk pattern to increase the likelihood that the operator/driver may react by a manual control operation.

On the other hand, if it is determined that the operator/driver does perform a manual control operation (step S116 returns YES), the method continues with outputting handover request information via the human machine interface to request the driver to take over control of the vehicle manually by acoustic, visual and/or haptic information signals. Exemplarily, step S117 may also be performed once the number of iterations in the loop of steps S114, S115 and S116 returning NO exceeds a threshold number. Also, it is possible that step S117 may also be performed, even if step S116 returns NO, once it is detected that the system reliably is too low to perform the jerk pattern control, and a handover is required urgently.

That is, when the driver performs a manual control operation in step S116 in response to being stipulated by feeling the applied jerk pattern, e.g. by operating the steering wheel and/or any of the control pedals, during the time when the jerk patterns are applied in step S114, such driver reaction may be used to trigger that a warning signal or request signal (e.g. an acoustic, visual and/or haptic human machine interface output 10 e.g. as in the exemplary embodiments of Figs. 6 and 7 above) in step S117 to inform the driver/operator that there is a need for handover from automated driving control to manual driving control.

That is, in some exemplary embodiments, sensing the driver reaction can be used to trigger an output of a warning signal (or handover information signal), wherein the automated driving control unit may instruct the human machine interface to output a visual, acoustic and/or haptic information to the driver/operator to indicate visually, acoustically and/or haptically that they need to take over control of the vehicle by manual control.

However, as the sensing of the actual driver reaction is based on a performed manual control operation, the method has the advantage that the driver/operator is already paying attention to the control of the vehicle at the time of outputting the visual, acoustic and/or haptic information signal to indicate that a handover from automated control to manual control is needed, required, requested or recommended.

Consequently, the driver/operator will not likely be confused or distracted, and it is highly likely that the driver/operator is paying attention and will not easily be confused so that a safe handover to manual control is advantageously possible.

Features, components and specific details of the structures of the above-described embodiments may be exchanged or combined to form further embodiments optimized for the respective application. As far as such modifications are readily apparent for an expert skilled in the art they shall be disclosed implicitly by the above description without specifying explicitly every possible combination, for the sake of conciseness of the present description. For example, it is possible to provide further embodiments in which exemplary applied jerk patterns include or combine lateral jerks and longitudinal jerks, and/or jerks having components in the lateral and longitudinal directions.

## Claims

1. Method for controlling a vehicle (8) being configured to operate under automated driving control,
the method comprising:
- controlling (S111) a movement of the vehicle (8) under automated driving control based on a target driving condition,
- monitoring (S112), during controlling the movement of the vehicle (8) under automated driving control, a hand-over criteria for determining whether there is a need for a hand-over from automated driving control to manual driving control by an operator of the vehicle (8), and
- applying (S114), when it is determined that there is a need for a hand-over from automated driving control to manual driving control, a jerk pattern (j(t)) to the controlled movement of the vehicle (8) under automated driving control,
**characterized by** at least one of (i) to (v):
(i) the jerk pattern (j(t)) includes a first jerk which is associated with a longitudinal and/or lateral motion of the vehicle (8), the jerk pattern (j(t)) includes a second jerk which is applied after the first jerk, the second jerk being directed into an opposite direction compared to a direction of the first jerk, and
an absolute value of the second jerk is larger than an absolute value of the first jerk;
(ii) the method further comprises:
- determining (S116), during and/or after applying the jerk pattern (j(t)) to the controlled movement of the vehicle (8), whether the operator performs a manual control operation to at least partially take over by manual control, and outputting (S117), when it is determined that the operator performs a manual control operation, a visual, haptical and/or acoustic information signal to the operator to indicate that a hand-over from automated driving control to manual driving control is requested;
(iii) when the target driving condition corresponds to driving on a substantially straight road at a constant target speed, the applied jerk pattern (j(t)) includes three or more jerks being respectively associated with a longitudinal motion of the vehicle (8);
(iv) when the target driving condition corresponds to driving on a substantially straight road along a substantially straight target path, the applied jerk pattern (j(t)) includes two or more jerks being respectively associated with a lateral acceleration of the vehicle (8); and
(v) when the target driving condition corresponds to driving on a curved road along a curved target path, the jerk pattern (j(t)) is applied such that a braking jerk is applied according to a negative longitudinal acceleration of the vehicle (8) when entering a curve of the curved road at a later timing and/or larger brake force compared to the target driving condition, and/or the jerk pattern (j(t)) is applied such that an accelerating jerk is applied according to a positive longitudinal acceleration of the vehicle (8) when existing a curve of the curved road at a later timing and/or smaller acceleration value compared to the target driving condition.

2. The method according to claim 1, wherein
the jerk pattern (j(t)) comprises one or more jerks applied to the movement of the vehicle (8) to change a longitudinal and/or lateral motion of the vehicle (8) according to the one or more jerks and is applied to the controlled movement of the vehicle (8) to stimulate the operator to take over by manual driving control.

3. The method according to claim 1, further comprising:
- controlling the movement of the vehicle (8) under automated driving control such as to apply another jerk pattern (j(t)) to the controlled movement of the vehicle (8) when it is determined that the operator does not perform a manual control operation.

4. The method according to claim 1, wherein
the jerk pattern (j(t)) is applied to change a longitudinal motion of the vehicle (8) such that a travelling speed of the vehicle (8) changes during applying the jerk pattern (j(t)) and reaches the target speed again after applying the jerk pattern (j(t)).

5. The method according to claim 1, wherein
the applied jerk pattern (j(t)) includes a first jerk to decelerate the vehicle (8) to a speed smaller than the target speed and a second jerk to accelerate the vehicle (8) again up to the target speed; or
the applied jerk pattern (j(t)) includes a first jerk to decelerate the vehicle (8) to a speed smaller than the target speed, a second jerk to accelerate the vehicle (8) to a speed larger than the target speed, and a third jerk to decelerate the vehicle (8) again down to the target speed.

6. The method according to claim 1, wherein
the jerk pattern (j(t)) is applied to change a lateral motion of the vehicle (8) such that a travelling direction of the vehicle (8) changes during applying the jerk pattern (j(t)) and aligns with a direction according to the substantially straight target path again after applying the jerk pattern (j(t)).

7. The method according to claim 1, wherein
the applied jerk pattern (j(t)) includes a first lateral jerk to change the travelling direction of the vehicle (8) towards a first lateral direction and a second lateral jerk to change the travelling direction of the vehicle (8) towards a second lateral direction opposite to the first lateral direction, such that the travelling direction aligns with a direction according to the substantially straight target path again after applying the jerk pattern (j(t)); or
the applied jerk pattern (j(t)) includes a first lateral jerk to change the travelling direction of the vehicle (8) towards the first lateral direction, a second lateral jerk to change the travelling direction of the vehicle (8) towards a second lateral direction opposite to the first lateral direction, and a third lateral jerk to change the travelling direction of the vehicle (8) towards the first lateral direction, such that the travelling direction aligns with a direction according to the substantially straight target path again after applying the jerk pattern (j(t)).

8. Apparatus for controlling a vehicle (8) being configured to operate under automated driving control according to a control method of at least one of the preceding claims,
the apparatus comprising:
- control means configured to control a movement of the vehicle (8) under automated driving control based on a target driving condition, and
- monitoring means configured to monitor, during controlling the movement of the vehicle (8) under automated driving control by the control means, a hand-over criteria for determining whether there is a need for a hand-over from automated driving control to manual driving control by an operator of the vehicle (8),
wherein the control means is further configured to apply, when it is determined that there is a need for a hand-over from automated driving control to manual driving control by the monitoring means, a jerk pattern (j(t)) to the controlled movement of the vehicle (8) under automated driving control.

## Patentansprüche

1. Verfahren zum Steuern eines Fahrzeugs (8), das konfiguriert ist, unter einer automatisierten Fahrsteuerung zu arbeiten,
wobei das Verfahren Folgendes umfasst:
- Steuern (S111) einer Bewegung des Fahrzeugs (8) unter einer automatisierten Fahrsteuerung anhand eines Ziel-Fahrzustands,
- Überwachen (S112) während der Steuerung der Bewegung des Fahrzeugs (8) unter einer automatisierten Fahrsteuerung eines Übergabekriteriums, um zu bestimmen, ob ein Bedarf an einer Übergabe von einer automatisierten Fahrsteuerung zu einer manuellen Fahrsteuerung durch einen Bediener des Fahrzeugs (8) besteht, und
- dann, wenn bestimmt wird, dass ein Bedarf an einer Übergabe von einer automatisierten Fahrsteuerung zu einer manuellen Fahrsteuerung besteht, Anwenden (S114) eines Ruckmusters (j(t)) auf die gesteuerte Bewegung des Fahrzeugs (8) unter einer automatisierten Fahrsteuerung,
**gekennzeichnet durch** wenigstens eines von (i) bis (v):
(i) das Ruckmuster (j(t)) enthält einen ersten Ruck, der einer longitudinalen und/oder lateralen Bewegung des Fahrzeugs (8) zugeordnet ist, wobei das Ruckmuster (j(t)) einen zweiten Ruck enthält, der nach dem ersten Ruck angewendet wird, wobei der zweite Ruck in Bezug auf eine Richtung des ersten Rucks in eine entgegengesetzte Richtung gerichtet ist, und
ein Absolutwert des zweiten Rucks ist größer als ein Absolutwert des ersten Rucks;
(ii) das Verfahren umfasst ferner:
- Bestimmen (S116) während und/oder nach dem Anwenden des Ruckmusters (j(t)) auf die gesteuerte Bewegung des Fahrzeugs (8), ob der Bediener einen manuellen Steuervorgang ausführt, um wenigstens teilweise die manuelle Steuerung zu übernehmen, und dann, wenn bestimmt wird, dass der Bediener einen manuellen Steuervorgang ausführt, Ausgeben (S117) eines visuellen und/oder haptischen und/oder akustischen Informationssignals an den Bediener, um anzugeben, dass eine Übergabe von der automatisierten Fahrsteuerung zu der manuellen Fahrsteuerung erforderlich ist;
(iii) wenn der Ziel-Fahrzustand einem Fahren auf einer im Wesentlichen geraden Fahrbahn mit einer konstanten Zielgeschwindigkeit entspricht, enthält das angewendete Ruckmuster (j(t)) drei oder mehr Rucke, die jeweils einer longitudinalen Bewegung des Fahrzeugs (8) zugeordnet sind;
(iv) wenn der Ziel-Fahrzustand einem Fahren auf einer im Wesentlichen geraden Fahrbahn längs eines im Wesentlichen geraden Zielwegs entspricht, enthält das angewendete Ruckmuster (j(t)) zwei oder mehr Rucke, die jeweils einer Querbeschleunigung des Fahrzeugs (8) zugeordnet sind; und
(v) wenn der Ziel-Fahrzustand einem Fahren auf einer gekrümmten Fahrbahn längs eines gekrümmten Zielwegs entspricht, wird das Ruckmuster (j(t)) in der Weise angewendet, dass ein Bremsruck in Übereinstimmung mit einer negativen longitudinalen Beschleunigung des Fahrzeugs (8) angewendet wird, wenn in eine Kurve der gekrümmten Fahrbahn zu einer späteren Zeit und/oder mit einer größeren Bremskraft im Vergleich zu dem Ziel-Fahrzustand eingefahren wird, und/oder das Ruckmuster (j(t)) in der Weise angewendet wird, dass ein Beschleunigungsruck in Übereinstimmung mit einer positiven longitudinalen Beschleunigung des Fahrzeugs (8) angewendet wird, wenn aus einer Kurve der gekrümmten Fahrbahn zu einer späteren Zeit und/oder mit einem kleineren Beschleunigungswert im Vergleich zu dem Ziel-Fahrzustand ausgefahren wird.

2. Verfahren nach Anspruch 1, wobei
das Ruckmuster (j(t)) einen oder mehrere Rucke enthält, die auf die Bewegung des Fahrzeugs (8) angewendet werden, um eine longitudinale und/oder laterale Bewegung des Fahrzeugs (8) in Übereinstimmung mit dem einen oder den mehreren Rucken zu ändern, und auf die gesteuerte Bewegung des Fahrzeugs (8) angewendet wird, um den Bediener anzuregen, die manuelle Fahrsteuerung zu übernehmen.

3. Verfahren nach Anspruch 1, das ferner Folgendes umfasst:
- Steuern der Bewegung des Fahrzeugs (8) unter einer automatisierten Fahrsteuerung in der Weise, dass ein weiteres Ruckmuster (j(t)) auf die gesteuerte Bewegung des Fahrzeugs (8) angewendet wird, wenn bestimmt wird, dass der Bediener keinen manuellen Steuervorgang ausführt.

4. Verfahren nach Anspruch 1, wobei
das Ruckmuster (j(t)) auf eine Änderung einer longitudinalen Bewegung des Fahrzeugs (8) angewendet wird, derart, dass sich eine Fahrgeschwindigkeit des Fahrzeugs (8) während der Anwendung des Ruckmusters (j(t)) ändert und nach Anwenden des Ruckmusters (j(t)) wieder die Zielgeschwindigkeit erreicht.

5. Verfahren nach Anspruch 1, wobei
das angewendete Ruckmuster (j(t)) einen ersten Ruck enthält, um das Fahrzeug (8) auf eine Geschwindigkeit zu verzögern, die kleiner als die Zielgeschwindigkeit ist, und einen zweiten Ruck enthält, um das Fahrzeug (8) wieder auf die Zielgeschwindigkeit zu beschleunigen; oder
das angewendete Ruckmuster (j(t)) einen ersten Ruck enthält, um das Fahrzeug (8) auf eine Geschwindigkeit zu verzögern, die kleiner als die Zielgeschwindigkeit ist, einen zweiten Ruck enthält, um das Fahrzeug (8) auf eine Geschwindigkeit zu beschleunigen, die höher als die Zielgeschwindigkeit ist, und einen dritten Ruck enthält, um das Fahrzeug (8) wieder unter die Zielgeschwindigkeit zu verzögern.

6. Verfahren nach Anspruch 1, wobei
das Ruckmuster (j(t)) angewendet wird, um eine laterale Bewegung des Fahrzeugs (8) zu ändern, derart, dass sich eine Fahrtrichtung des Fahrzeugs (8) während des Anwendens des Ruckmusters (j(t)) ändert und nach dem Anwenden des Ruckmusters (j(t)) wieder mit einer Richtung gemäß dem im Wesentlichen geradlinigen Zielweg in Übereinstimmung gelangt.

7. Verfahren nach Anspruch 1, wobei
das angewendete Ruckmuster (j(t)) einen ersten lateralen Ruck enthält, um die Fahrtrichtung des Fahrzeugs (8) in eine erste laterale Richtung zu ändern, und einen zweiten lateralen Ruck enthält, um die Fahrtrichtung des Fahrzeugs (8) in eine zweite laterale Richtung, die zu der ersten lateralen Richtung entgegengesetzt ist, zu ändern, derart, dass die Fahrtrichtung nach dem Anwenden des Ruckmusters (j(t)) wieder mit einer Richtung gemäß dem im Wesentlichen geradlinigen Zielweg in Übereinstimmung gelangt; oder
das angewendete Ruckmuster (j(t)) einen ersten lateralen Ruck enthält, um die Fahrtrichtung des Fahrzeugs (8) in die erste laterale Richtung zu ändern, einen zweiten lateralen Ruck enthält, um die Fahrtrichtung des Fahrzeugs (8) in eine zweite laterale Richtung, die zu der ersten lateralen Richtung entgegengesetzt ist, zu ändern, und einen dritten lateralen Ruck enthält, um die Fahrtrichtung des Fahrzeugs (8) in die erste laterale Richtung zu ändern, derart, dass die Fahrtrichtung nach dem Anwenden des Ruckmusters (j(t)) wieder mit einer Richtung gemäß dem im Wesentlichen geradlinigen Zielweg in Übereinstimmung gelangt.

8. Vorrichtung zum Steuern eines Fahrzeugs (8), das konfiguriert ist, unter einer automatisierten Fahrsteuerung in Übereinstimmung mit einem Steuerverfahren nach wenigstens einem der vorhergehenden Ansprüche betrieben zu werden,
wobei die Vorrichtung Folgendes umfasst:
- Steuermittel, die konfiguriert sind, eine Bewegung des Fahrzeugs (8) unter einer automatisierten Fahrsteuerung anhand eines Zielfahrzustands zu steuern und
- Überwachungsmittel, die konfiguriert sind, während der Steuerung der Bewegung des Fahrzeugs (8) unter der automatisierten Fahrsteuerung durch die Steuermittel ein Übergabekriterium zu überwachen, um zu bestimmen, ob ein Bedarf an einer Übergabe von der automatisierten Fahrsteuerung zu einer manuellen Fahrsteuerung durch einen Bediener des Fahrzeugs (8) besteht,
wobei die Steuermittel ferner konfiguriert sind, dann, wenn durch die Überwachungsmittel bestimmt wird, dass ein Bedarf an einer Übergabe von der automatisierten Fahrsteuerung zu der manuellen Fahrsteuerung besteht, ein Ruckmuster (j(t)) auf die gesteuerte Bewegung des Fahrzeugs (8) unter der automatisierten Fahrsteuerung anzuwenden.

## Revendications

1. Procédé pour commander un véhicule (8) configuré pour fonctionner sous commande de conduite automatisée, le procédé consistant à :
- commander (S111) un mouvement du véhicule (8) sous commande de conduite automatisée sur la base d'une condition de conduite cible,
- surveiller (S112), pendant la commande du mouvement du véhicule (8) sous commande de conduite automatisée, un critère de transfert pour déterminer s'il est nécessaire de passer de la commande de conduite automatisée à une commande de conduite manuelle par un opérateur du véhicule (8), et
- appliquer (S114), lorsqu'il est déterminé qu'il est nécessaire de passer de la commande de conduite automatisée à la commande de conduite manuelle, un motif d'à-coup (j(t)) au mouvement commandé du véhicule (8) sous commande de conduite automatisée,
**caractérisé par** au moins un des points de (i) à (v) :
(i) le motif d'à-coup (j(t)) comprend un premier à-coup qui est associé à un mouvement longitudinal et/ou latéral du véhicule (8), lequel motif d'à-coup (j(t)) inclut un deuxième à-coup qui est appliqué après le premier à-coup, le deuxième à-coup étant dirigé dans une direction opposée à une direction du premier à-coup, et
une valeur absolue du deuxième à-coup est plus grande qu'une valeur absolue du premier à-coup ;
(ii) le procédé consiste en outre à :
- déterminer (S116), pendant et/ou après avoir appliqué le motif d'à-coup (j(t)) au mouvement commandé du véhicule (8), si l'opérateur effectue une opération de commande manuelle pour reprendre le contrôle au moins partiellement par commande manuelle, et délivrer (S117), lorsqu'il est déterminé que l'opérateur effectue une opération de commande manuelle, un signal d'information visuel, haptique et/ou acoustique à l'opérateur pour indiquer qu'un passage de la commande de conduite automatisée à la commande de conduite manuelle est demandé ;
(iii) lorsque la condition de conduite cible correspond à une conduite sur une route sensiblement droite à une vitesse cible constante, le motif d'à-coup (j(t)) appliqué inclut trois ou plusieurs à-coups respectivement associés à un mouvement longitudinal du véhicule (8) ;
(iv) lorsque la condition de conduite cible correspond à une conduite sur une route sensiblement droite le long d'une trajectoire cible sensiblement droite, le motif d'à-coup (j(t)) appliqué inclut deux ou plusieurs à-coups respectivement associés à une accélération latérale du véhicule (8) ; et
(v) lorsque la condition de conduite cible correspond à une conduite sur une route courbe le long d'une trajectoire cible courbe, le motif d'à-coup (j(t)) est appliqué de telle sorte qu'un à-coup de freinage est appliqué selon une accélération longitudinale négative du véhicule (8) à l'entrée dans une courbe de la route courbe plus tardivement et/ou avec une force de freinage plus grande par rapport à la condition de conduite cible, et/ou le motif d'à-coup (j(t)) est appliqué de telle sorte qu'un à-coup d'accélération est appliqué selon une accélération longitudinale positive du véhicule (8) à la sortie d'une courbe de la route courbe plus tardivement et/ou avec une plus petite valeur d'accélération par rapport à la condition de conduite cible.

2. Procédé selon la revendication 1, dans lequel
le motif d'à-coup (j(t)) comprend un ou plusieurs à-coups appliqués au mouvement du véhicule (8) pour changer un mouvement longitudinal et/ou latéral du véhicule (8) selon un ou plusieurs à-coups et est appliqué au mouvement commandé du véhicule (8) pour inciter l'opérateur à reprendre le contrôle par la commande de conduite manuelle.

3. Procédé selon la revendication 1, consistant en outre à :
- commander le mouvement du véhicule (8) sous commande de conduite automatisée de manière à appliquer un autre motif d'à-coup (j(t)) au mouvement commandé du véhicule (8) lorsqu'il est déterminé que l'opérateur n'effectue pas une opération de commande manuelle.

4. Procédé selon la revendication 1, dans lequel
le motif d'à-coup (j(t)) est appliqué pour changer un mouvement longitudinal du véhicule (8) de telle sorte qu'une vitesse de déplacement du véhicule (8) change pendant l'application du motif d'à-coup (j(t)) et atteint à nouveau la vitesse cible après l'application du motif d'à-coup (j(t)).

5. Procédé selon la revendication 1, dans lequel
le motif d'à-coup (j(t)) appliqué inclut un premier à-coup pour décélérer le véhicule à une vitesse inférieure à la vitesse cible et un deuxième à-coup pour réaccélérer le véhicule (8) à la vitesse cible ; ou
le motif d'à-coup (j(t)) appliqué inclut un premier à-coup pour décélérer le véhicule à une vitesse inférieure à la vitesse cible, un deuxième à-coup pour accélérer le véhicule (8) à une vitesse supérieure à la vitesse cible et un troisième à-coup pour décélérer à nouveau le véhicule (8) à la vitesse cible.

6. Procédé selon la revendication 1, dans lequel
le motif d'à-coup (j(t)) est appliqué pour changer un mouvement latéral du véhicule (8) de telle sorte qu'une direction de déplacement du véhicule (8) change pendant l'application du motif d'à-coup (j(t)) et s'aligne à nouveau avec une direction correspondant à la trajectoire cible sensiblement droite après l'application du motif d'à-coup (j(t)).

7. Procédé selon la revendication 1, dans lequel
le motif d'à-coup (j(t)) appliqué inclut un premier à-coup latéral pour changer la direction de déplacement du véhicule (8) vers une première direction latérale et un deuxième à-coup latéral pour changer la direction de déplacement du véhicule (8) vers une seconde direction latérale opposée à la première direction latérale, de telle sorte que la direction de déplacement s'aligne à nouveau avec une direction correspondant à la trajectoire cible sensiblement droite après l'application du motif d'à-coup (j(t)) ; ou
le motif d'à-coup (j(t)) appliqué inclut un premier à-coup latéral pour changer la direction de déplacement du véhicule (8) vers la première direction latérale, un deuxième à-coup latéral pour changer la direction de déplacement du véhicule (8) vers une seconde direction latérale opposée à la première direction latérale et un troisième à-coup latéral pour changer la direction de déplacement du véhicule (8) vers la première direction latérale, de telle sorte que la direction de déplacement s'aligne à nouveau avec une direction correspondant à la trajectoire cible sensiblement droite après l'application du motif d'à-coup (j(t)).

8. Appareil pour commander un véhicule (8) configuré pour fonctionner sous commande de conduite automatisée d'après un procédé de commande selon au moins l'une des revendications précédentes,
l'appareil comprenant :
- un moyen de commande configuré pour commander un mouvement du véhicule (8) sous commande de conduite automatisée sur la base d'une condition de conduite cible, et
- un moyen de surveillance configuré pour surveiller, pendant la commande du mouvement du véhicule (8) sous commande de conduite automatisée par le moyen de commande, un critère de transfert pour déterminer s'il est nécessaire de passer de la commande de conduite automatisée à une commande de conduite manuelle par un opérateur du véhicule (8),
dans lequel le moyen de commande est en outre configuré pour appliquer, lorsqu'il est déterminé par le moyen de surveillance qu'il est nécessaire de passer de la commande de conduite automatisée à la commande de conduite manuelle, un motif d'à-coup (j(t)) au mouvement commandé du véhicule (8) sous commande de conduite automatisée.
